# EUROPEAN PATENT SPECIFICATION

(11) **EP 3 641 561 B1**
(45) Date of publication and mention of the grant of the patent: **05.01.2022**
(21) Application number: 18734928.7
(22) Date of filing: 19.06.2018
(51) Int. Cl.: A23L 5/20, A23F 5/16, A23L 19/18

(54) **REDUCTION OF ACRYLAMIDE FORMATION**
VERRINGERUNG VON ACRYLAMIDBILDUNG
RÉDUCTION DE LA FORMATION D'ACRYLAMIDE

(30) Priority: 19.06.2017 GB 201709751
(43) Date of publication of application: 29.04.2020
(73) Proprietor: Zeracryl AS, 1410 Kolbotn (NO)
(72) Inventor: BAARDSETH, Pernille, 1410 Kolbotn (NO); BLOM, Hans, 1410 Kolbotn (NO); ENERSEN, Grethe, 1410 Kolbotn (NO); SKREDE, Grete, 1410 Kolbotn (NO); SLINDE, Erik, 1410 Kolbotn (NO); SUNDT, Thea W, 1410 Kolbotn (NO)
(74) Representative: Dehns
(86) International application number: PCT/GB2018/051702
(87) International publication number: WO 2018/234784

(56) References cited:
- EP-A1- 1 568 283
- EP-A1- 2 361 512
- WO-A2-2004/028276
- WO-A2-2005/094591
- CN-A- 106 721 930
- US-A1- 2004 086 597

## Description

The present invention generally relates to methods of reducing the formation of acrylamide during high temperature cooking of foods and food ingredients, in particular vegetables or tubers which are fried, grilled, baked or roasted.

More specifically, the invention relates to methods of reducing acrylamide in the production of deep fried vegetable and tuber products such as French fries.

As far back as 2002, Swedish researchers presented preliminary findings about the presence of acrylamide in certain fried and baked foods, most notably in potato crisps (known in the United States as potato 'chips') and French fries, and in baked cereal products. Acrylamide is carcinogenic and is now understood to be formed in the Maillard reaction between certain amino acids (in particular, asparagine) and reducing sugars, such as glucose and fructose. It is formed when proteinaceous foods having a high carbohydrate content, such as potatoes, bread, biscuits, cereals and coffee beans, are subjected to high temperatures (e.g. above 120°C) during cooking or roasting.

The Maillard reaction is also important in the development of desirable colour, flavour and aroma compounds during cooking of foods. The challenge is to reduce the formation of acrylamide whilst still maintaining these desirable characteristics.

A variety of methods have been proposed to reduce the amount of acrylamide in cooked foods. Most have involved varying the time and temperature of cooking, or reducing acrylamide precursors (e.g. asparagine and reducing sugars) in the raw food prior to cooking. Methods proposed for use in reducing acrylamide precursors include: the use of microorganisms which metabolise free sugars and/or free asparagine; the use of asparaginase (an enzyme that hydrolyses asparagine to aspartic acid); the use of amino acids other than asparagine (in order to promote competing reactions and/or by covalent binding of the acrylamide formed); replacement of reducing sugars in food products with nonreducing sugars (e.g. replacing glucose by sucrose); the addition of di- or trivalent cations (to suppress the Maillard reaction); and genetic modification of carbohydrate-containing food sources to reduce the levels of acrylamide precursors.

Food and health agencies in many countries are concerned with the high level of acrylamide in fried food products and have recognised that there is an urgent need to lower the intake of acrylamide to reduce the incidence of cancer arising from its consumption.

The European Commission has recently made several recommendations relating to mitigation measures and benchmark levels for the reduction of the presence of acrylamide in food (see: EU Regulation No. 2017/2158 dated 20 November 2017). Mitigation measures relating to French fries and other cut deep fried or oven-fried potato products include blanching of potato strips to remove some of the reducing sugars from the outside of the strips, and reducing the temperature for cooking. For final cooking, it recommends that the temperature be kept between 160 and 175°C when frying, and between 180 to 220°C when using an oven. Although such measures are effective in reducing the formation of acrylamide, these can adversely impact the sensory qualities (e.g. texture, taste and appearance) of deep fried and oven-fried potato products making these less acceptable to consumers. Cooking methods carried out at lower temperatures have a tendency to produce a final product which is less 'crisp' and, when deep fried at lower temperatures and for longer periods, potato products tend to have a greasy texture due to excessive absorption of oil during the cooking process. Excessive blanching of potato strips can also cause a loss in nutrients (e.g. due to leaching of water soluble components), a reduction in the dry weight of the potato, and a loss in texture and colour on cooking. Any reduction in dry weight results in wastage of the potato product. When blanching is carried out on an industrial scale it involves the use of large quantities of water which has a negative impact on the environment.

In WO 2004/028276, lactic acid-producing bacteria are proposed for the treatment of potato batons prior to deep frying to produce French fries. Soaking of batons for 5 hours in a brine containing the *lactobacillus* strain NCIMB 40450 gave rise to a 38% reduction in acrylamide on cooking.

The use of various food grade acids to treat uncooked French fries to reduce acrylamide on cooking is also suggested in WO '276. A wide range of acids are proposed, including both organic and inorganic acids. The use of hydrochloric acid is preferred although no results for acrylamide reduction are provided. This earlier document suggests the acid should be used in a quantity and strength sufficient to reduce the surface pH of the uncooked potato. It does not recognise any need for selection of the pH of the acid-containing solution based on the chosen acid.

Acids are generally known for their mitigating effect on the production of acrylamide and previously it has been suggested this is due to the protonation of asparagine amino groups at low pH. This effectively blocks the nucleophilic addition of asparagine to a carbonyl compound (e.g. glucose) preventing the formation of the corresponding Schiff base, a key intermediate in the Maillard reaction. US 2006/0240174, for example, proposes the use of various pH-lowering agents for the treatment of foods or food ingredients prior to heat treatment. A range of organic and inorganic acids are proposed and it is suggested the foods or food ingredients should be treated such that their pH is lowered compared to their intrinsic pH. As with WO '276, this document does not suggest the need to select a pH for the acid treatment which is dependent on the choice of acid.

US 2004/086597 discloses a process to reduce the formation of acrylamide during cooking. The process uses microorganisms to metabolize sugars in the food sufficiently to reduce the formation of the acrylamide. The foods include fried and baked starchy foods.

Alternative (e.g. improved) methods to reduce the formation of acrylamide in food on cooking are still required. The present invention addresses this need. The invention is as described in claims 1 to 16.

The present inventors have now surprisingly found that the acrylamide content of cooked foods can be effectively reduced by treatment of the foods prior to cooking with selected organic acids which are employed in a specific pH range which is determined by the nature of the acid. In particular, the inventors have found the use of an α-hydroxy acid (herein also referred to as "AHA") at a pH at which it is at least partly non-dissociated (i.e. protonated) is particularly beneficial.

More specifically, what the inventors have found is that non-dissociated (i.e. protonated) AHA is required to achieve the desired level of reduction in acrylamide and thus that the pH at which any given AHA is employed is important and should be selected based on the choice of AHA.

Although not wishing to be bound by theory, the inventors propose a hitherto unrecognised reaction by which an AHA may be capable of preventing the Maillard reaction and thus the production of acrylamide. They propose that the AHA reacts with asparagine to form a 6-ring ester-acid amine. This effectively prevents asparagine from taking part in the Maillard reaction. This is illustrated below in the case of lactic acid:

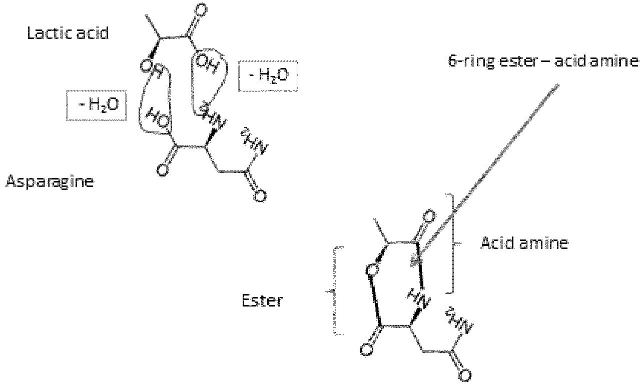

Only AHA which is present, at least in part, in non-dissociated (i.e. protonated) form can take part in this reaction with asparagine and this is considered key to certain aspects of the invention herein described. The inventors thus propose that the AHA molecule should be neutral when approaching the asparagine, and that the pH should be adjusted accordingly; the pH should preferably be well below the pKₐ of the AHA. This has not previously been recognised.

pKₐ is well understood in the art and is a measure of the pH at which an acid is 50% dissociated. pKₐ is the negative logarithm (to the base 10) of the dissociation constant (Kₐ) of an acid measured in an aqueous medium at a temperature of 25°C. An acid may have more than one dissociation constant depending on the number of protons that it can give up, and hence it may have more than one pKₐ value, denoted pKₐ₁, pKₐ₂, etc. pKₐ values of acids can readily be found in the literature, for example, in the CRC Handbook of Chemistry and Physics, 97th Edition, June 2016, Ed. William M. Haynes.

At a pH which is equal to the pKₐ of the acid, 50% of the acid is non-dissociated and 50% is dissociated. At a pH above the pKₐ value, a greater proportion of the acid is dissociated. The inventors propose the use of an AHA under conditions in which at least a proportion of the AHA is present in non-dissociated form. More specifically, they propose the use of an AHA at a pH at which sufficient AHA is present in non-dissociated form to react with the amino acids (e.g. asparagine) present in the food.

At a pH which corresponds to the pKₐ value of the AHA + 1 pH unit, about 10% of the AHA will be present in non-dissociated form. The inventors propose that this may be sufficient to react with amino acids to prevent the Maillard reaction and thus reduce the formation of acrylamide on cooking. At lower pH values the proportion of non-dissociated AHA increases and the use of an AHA under conditions at which at least 50%, e.g. at least 55%, at least 60%, at least 70%, at least 80%, or at least 90%, is present in non-dissociated form, represents specific embodiments of the invention. In some embodiments, the AHA may be employed under pH conditions in which up to 99.9% of the AHA is non-dissociated, e.g. from 90 to 99%, from 92 to 98%, or from 94 to 96%. Unless otherwise specified, all % herein referred to are on a molar basis.

In one embodiment, the AHA may be used at a pH which is equal to its pKₐ (or, where the AHA has more than one pKₐ value, at a pH which is equal to its lowest pKₐ). In one embodiment, the AHA may be used at a pH which is less than its pKₐ (or, where the AHA has more than one pKₐ value, at a pH which is less than its lowest pKₐ).

In certain embodiments herein described the AHA may be employed at a pH which is less than or equal to its pKₐ or, where the AHA has more than one pKₐ value, at a pH which is less than or equal to its lowest pKₐ.

Described herein is the use of an α-hydroxy acid in at least partly non-dissociated form in the treatment of a carbohydrate-containing food or food ingredient to reduce acrylamide formation during subsequent cooking at a temperature at which the Maillard reaction occurs, e.g. at a temperature above about 120°C.

Described herein is a method for preparing a carbohydrate-containing food or food ingredient prior to cooking at a temperature at which the Maillard reaction occurs, e.g. at a temperature above about 120°C, said method comprising treatment of said food or food ingredient with an α-hydroxy acid in at least partly non-dissociated form. Foods and food ingredients prepared according to this method are also described herein.

Described herein is a method of reducing acrylamide during cooking of a carbohydrate-containing food product at a temperature at which the Maillard reaction occurs, e.g. at a temperature above about 120°C, said method comprising at least the following steps:
contacting said food product or a carbohydrate-containing ingredient of said food product with an α-hydroxy acid in at least partly non-dissociated form;
if required, combining said carbohydrate-containing ingredient with at least one other food ingredient to provide a food product; and
subsequently cooking said food product at a temperature at which the Maillard reaction occurs, e.g. at a temperature above about 120°C.

In this method, cooking includes part-cooking (e.g. par-frying). "Part-cooking" is a term used herein to define a cooking method in which the resulting part-cooked product is not in a "ready-to-eat" form. A "part-cooked" product is one which requires one or more additional cooking steps in order to provide a cooked food which is "ready-to-eat". As herein described, part-cooking is commonly used when preparing foods such as French fries which are twice-cooked (e.g. 'twice-fried'). Other foods which may be cooked a second time (e.g. 'twice-fried') include sweet potato fries. Part-cooked foods, such as French fries, which have been part-fried and which are intended to be cooked further to produce a "ready-to-eat" product may also be referred to as "par-fried".

Cooked and part-cooked food products prepared according to this method are also described herein. Optionally, such products may be provided in a packaged form as herein described. For example, part-cooked (e.g. par-fried) French fries may be provided in a package in frozen form.

Described herein is a method of reducing acrylamide during cooking of a carbohydrate-containing food at a temperature at which the Maillard reaction occurs, e.g. at a temperature above about 120°C, said method comprising at least the following steps:
contacting said food with a first α-hydroxy acid in at least partly non-dissociated form;
part-cooking (e.g. par-frying) said food at a first temperature at which the Maillard reaction occurs, e.g. at a temperature above about 120°C, whereby to form a part-cooked food;
optionally packaging and/or storing said part-cooked food;
optionally contacting said part-cooked food with a second α-hydroxy acid in at least partly non-dissociated form; and
subsequently further cooking said food (e.g. by finish-frying) at a second temperature at which the Maillard reaction occurs, e.g. at a temperature above about 120°C.

In this method, the first and second α-hydroxy acids (where a second α-hydroxy acid is employed) may be the same or different. Typically, they will be the same. The first and second cooking temperatures may be the same. However, generally they will be different, for example the second cooking temperature may be higher than the first. Cooked foods prepared according to this method form a further aspect of the invention. Optionally, such foods may be provided in a packaged form as herein described.

The invention provides a method of reducing acrylamide during cooking of a carbohydrate-containing food in which a part-cooked (e.g. par-fried) food prepared as described herein is contacted with a second α-hydroxy acid in at least partly non-dissociated form prior to further cooking (e.g. finish frying) at a temperature at which the Maillard reaction occurs, e.g. at a temperature above about 120°C. This method involves treatment of the food with an α-hydroxy acid as herein described prior to each high temperature cooking step.

In one aspect the invention thus provides a method of reducing acrylamide during cooking of a carbohydrate-containing food, said method comprising at least the following steps:
contacting said food with a first α-hydroxy acid in at least partly non-dissociated form;
part-cooking (e.g. par-frying) said food at a first temperature at which the Maillard reaction occurs, e.g. at a temperature above about 120°C, whereby to form a part-cooked food;
optionally packaging and/or storing said part-cooked food;
contacting said part-cooked food with a second α-hydroxy acid in at least partly non-dissociated form; and
subsequently further cooking said food (e.g. by finish-frying) at a second temperature at which the Maillard reaction occurs, e.g. at a temperature above about 120°C.

In this aspect of the invention, the first and second α-hydroxy acids may be the same or different. Typically, they will be identical. The first and second cooking temperatures may be the same or different. However, generally they will be different, for example the second cooking temperature may be higher than the first. Cooked foods prepared according to this method are also described herein. Optionally, such foods may be provided in a packaged form as herein described.

In this aspect of the invention the first and second α-hydroxy acids are each, independently of one another, employed at a pH which is less than or equal to its pKₐ (or, where appropriate, its lowest pKₐ). The first and second α-hydroxy acids are each independently selected from lactic, malic and tartaric acids.

Where a food is contacted with an α-hydroxy acid prior to part-cooking (e.g. par-frying) and prior to final cooking (e.g. finish frying), it will be understood that these treatment steps need not be carried out at the same time or in the same location. In the preparation of French fries, for example, par-frying will typically be carried out in a factory by a food manufacturer. The par-fried product is packaged for supply to retailers (e.g. for sale to consumers for home cooking), or to restaurants, fast food outlets or other catering institutions for final cooking. The final cooking step may involve oven cooking or finish-frying. Generally, the part-cooked food will be cooled, frozen and packaged in the form of a frozen food product. In one embodiment, at the point of final cooking, the frozen food is removed from the freezer and, either whilst still frozen or once thawed, undergoes a further α-hydroxy acid treatment in accordance with the invention whereby to further reduce acrylamide on final cooking. In one embodiment, the part-cooked food is thus frozen and packaged to produce a "ready-to-cook" frozen food product.

Part-cooked food products prepared in accordance with any of the methods herein described can be frozen and, optionally, packaged. Where these are packaged and supplied in "ready-to-cook" form these may be provided in a package or a container together with instructions relating to preparation of the final cooked food, for example instructions relating to any additional α-hydroxy acid treatment step and final cooking times and temperatures (e.g. by oven cooking or finish frying).

Also described herein is a package or container containing a part-cooked carbohydrate-containing food (e.g. a part-cooked, frozen food), together with instructions to contact said food with an α-hydroxy acid as herein described prior to final cooking. The part-cooked food is preferably a food which has been prepared by a method comprising the steps of: contacting the food (e.g. the un-cooked and/or blanched food) with a first α-hydroxy acid as herein described; and part-cooking said food at a temperature at which the Maillard reaction occurs. The part-cooked food will typically be "ready-to-cook" French fries, more preferably frozen "ready-to-cook" French fries.

In a further aspect the invention provides a method of reducing acrylamide during final cooking of a part-cooked carbohydrate-containing food, said method comprising at least the following steps:
contacting said part-cooked food with an α-hydroxy acid in at least partly non-dissociated form; and
subsequently cooking said food (e.g. by finish-frying) at a temperature at which the
Maillard reaction occurs, e.g. at a temperature above about 120°C;
wherein said part-cooked food is obtainable (e.g. obtained or prepared) by contacting a carbohydrate-containing food (e.g. which is un-cooked and/or blanched) with an α-hydroxy acid in at least partly non-dissociated form; and part-cooking (e.g. par-frying) said food at a temperature at which the Maillard reaction occurs, e.g. at a temperature above about 120°C.

In this aspect of the invention the α-hydroxy acids are each, independently of one another, employed at a pH which is less than or equal to its pKₐ (or, where appropriate, its lowest pKₐ) and are independently selected from lactic, malic and tartaric acids.

In this method the α-hydroxy acids need not be identical. The part-cooked food will typically be "ready-to-cook" French fries, more preferably frozen "ready-to-cook" French fries.

As used herein, the term "a-hydroxy acid" (or "AHA") refers to a carboxylic acid substituted with a hydroxy group at the α-carbon atom. It includes lactones having a hydroxy group at the α-position and which may be saturated or unsaturated. Examples of AHAs provided in the form of a lactone include, but are not limited to, ascorbic acid and glucono-delta lactone. In addition to the hydroxy group at the α-carbon atom, an α-hydroxy acid or "AHA" as herein defined may contain one or more additional hydroxy groups.

The AHA described herein may be any AHA which is acceptable for use in food products, i.e. a food grade acid which is suitable for human consumption. Typically it will be an AHA which has been approved for use as a food additive by a food-related administration (e.g. the European Food Safety Authority, or the US Food and Drug Administration). AHAs having an E-number and which are therefore permitted for use as food additives within the European Union are particularly suitable.

Examples of AHAs include lactic acid, malic acid, tartaric acid, citric acid, ascorbic acid, glycolic acid and glucono-delta lactone. Of these, lactic acid, malic acid, tartaric acid, citric acid, and ascorbic acid have E-numbers. AHAs for use in the invention are lactic, malic and tartaric acids. The use of lactic acid is especially preferred.

For use in treating any cereal, vegetable-based or tuber-based (e.g. potato-based) food products, lactic acid, malic acid and tartaric acid are preferred. Especially preferred is lactic acid.

Any of the AHAs for use in the invention and which are described herein may be provided by a microorganism. For example, the AHA may be produced in a culture of microorganisms (e.g. a bacterial culture) which can be used as the treatment solution to contact the food or food ingredient. The treatment solution may be provided in the form of an aqueous medium containing the microorganisms (e.g. bacteria) which are capable of producing the desired AHA. Suitable cultures may be selected according to the nature of the chosen AHA and are well known to those skilled in the art. Suitable bacteria for producing lactic acid are discussed below.

Where the AHA is lactic acid, this may be provided by a lactic acid generating microorganism. Lactic acid producing microorganisms are well known and examples include lactic acid bacteria such as *Bifidobacterium sp., Brevibacterium sp., Lactobacillus sp., Lactococcus sp., Leuconostoc sp., Micrococcus sp., Oenococcus sp., Pediococcus sp.,* and *Streptococcus sp.* Lactobacilli are especially preferred for use in the invention, in particular Lactobacillus plantarum strains NCDO 1752 and NCDO 1193 (available from the National Collection of Food Bacteria) and Lactobacillus NCIMB 40450. Other strains of lactobacillus which generate lactic acid and are safe for use in foodstuff treatment have been described widely in the scientific literature and any of these may be used in the invention.

Treatment with any culture of microorganisms which produces the AHA may be carried out according to any of the methods herein described, for example by dipping of the food or food ingredient in an aqueous medium containing a bacterial culture. As will be understood, the temperature of the treatment solution will generally be in a range which is suitable for culture and growth of the selected microorganisms, e.g. this may range from 4 to 45°C, preferably from 25 to 35°C. In certain embodiments, the use of microorganisms to produce the AHA may also have the additional advantage that this reduces the amount of sugar in the food product.

In the method according to the invention in which a food is contacted with an α-hydroxy acid (AHA) prior to part-cooking (e.g. par-frying) and before further cooking (e.g. finish frying), one or both of the AHA treatment steps may be carried out using an AHA-producing microorganism as described herein (e.g. a lactic acid producing microorganism). In one embodiment, the first α-hydroxy acid which is used to treat the food prior to part-cooking, for example in industry, is an AHA which is not produced by a microorganism (e.g. lactic, malic or tartaric acid), and the second α-hydroxy acid used to treat the food prior to final cooking, for example in a restaurant or at home, is one which is produced by a microorganism (e.g. a bacteria such as a lactic-acid producing bacteria).

Any reference herein to the use of an α-hydroxy acid ("AHA") in "at least partly non-dissociated form" refers to its use under conditions at which at least a proportion of the AHA is present in non-dissociated (i.e. protonated) form. In certain embodiments at least 10% of the AHA may be present in non-dissociated form. In other embodiments, at least 20%, at least 30%, at least 40%, or at least 50% may be provided in non-dissociated form. In preferred embodiments, at least 60%, at least 70%, at least 80%, or at least 90%, of the AHA may be present in non-dissociated form. In some embodiments, the AHA may be employed under conditions in which up to 99.9% of the AHA is non-dissociated, e.g. from 90 to 99%, from 92 to 98%, or from 94 to 96%.

At a given temperature, the pH of an aqueous solution in which the AHA is provided will influence its degree of dissociation and so may be chosen accordingly.

The pH at which the AHA is used is dependent on the choice of the AHA and is determined by its pKₐ value. The AHA may be used in an aqueous solution at a pH at which it is at least partly non-dissociated, preferably at a pH which is below its pKₐ + 1, more preferably at or below its pKₐ, e.g. below its pKₐ. Where the AHA contains more than one acid group and therefore has more than one pKₐ value, the selected pH may be determined according to its lowest pKₐ (pKₐ₁).
pKₐ values and, where appropriate, pKₐ₁ values of AHAs as herein described are as follows: lactic acid: pKₐ = 3.86
malic acid: pKₐ₁ = 3.40
tartaric acid: pKₐ₁ = 2.98
citric acid: pKₐ₁ = 3.13
ascorbic acid: pKₐ₁ = 4.17
glycolic acid: pKₐ = 3.83
glucono-delta lactone: pKₐ = 3.86

In one embodiment, the AHA may be used at a pH below its pKₐ (or, where appropriate, its lowest pKₐ). In certain embodiments, the AHA may be used at a pH at least 0.1 unit, preferably at least 0.2, 0.3, 0.4 or 0.5 units, lower than its pKₐ (or, where appropriate, its lowest pKₐ). More preferably, it may be used at a pH at least 0.6, 0.7, 0.8 or 0.9 units lower than its pKₐ (or lowest pKₐ), e.g. at a pH which is at least 1.0 unit lower than its pKₐ (or lowest pKₐ).

In one set of embodiments, the AHA may be used at a pH at least 1.2 units, e.g. at least 1.5 or 1.8 units, lower than its pKₐ (or lowest pKₐ). In one embodiment, the pH will be up to 2.0 units lower than the pKₐ (or lowest pKₐ) of the AHA.

In one set of embodiments, the AHA may be used at a pH which is from 0.1 to 3.0 units, for example from 0.5 to 2.0 units, or from 1.0 to 2.0 units lower than its pKₐ (or lowest pKₐ).

For example, the treatment with the AHA may be carried out using an aqueous solution of the AHA at a pH which is in the range from x - 0.5 to x - 3.0, in the range from x - 0.5 to x - 2.0, e.g. in the range x - 1.0 to x - 1.5, wherein x is the pKₐ (or lowest pKₐ) of the selected AHA.

The choice of pH for the AHA treatment in accordance with the invention is thus dependent on the selected AHA, but may for example be below 5, preferably below 4, or more preferably below 3 or below 2. In one set of embodiments, the pH may range from 1 to 5, preferably from 1.5 to 4, e.g. from 2 to 3.

pH and pKₐ values as referred to herein are as measured at ambient temperature, typically and preferably at 25°C.

The AHA may be used in the form of an aqueous solution having the selected pH value. The pH of the solution can be adjusted by the addition of any known acid or base approved for food use. In one embodiment, the methods herein described may thus include the additional steps of providing an aqueous solution of an AHA and adjusting the pH of the solution by the addition of at least one acid or base. Suitable acids include, but are not limited to, inorganic acids such as hydrochloric acid, phosphoric acid, etc. Suitable bases include, but are not limited to, sodium hydroxide. For example, the pH of the AHA-containing solution may be adjusted to the desired level using 1M HCI or 1M NaOH. The required amount of acid or base can be readily determined by those skilled in the art.

The concentration of the AHA in the treatment solution may vary and will be dependent on several factors, including the free amino acid content (e.g. the asparagine content) of the food or food ingredient. In one embodiment, the concentration of AHA should be chosen such that this is at least equal to or higher than the total amount of free amino acids in the food or food ingredient. This ensures that the level of AHA is sufficient to react with all free amino acids which are present. In another embodiment, the concentration of AHA should be equal to or higher than the amount of asparagine in the food or food ingredient.

For practical use, the concentration level of AHA will also be determined by its taste. Too high a level of the AHA may give rise to an acid taste, which may be considered an "off-taste". Concentration levels of the AHA should be chosen to avoid any unacceptable "off-taste".

The concentration of the AHA for use in the invention may range from 1 to 500 mM, e.g. from 10 to 400 mM, from 20 to 350 mM, or from 30 to 300 mM.

The inventors have found that a high concentration of the AHA is particularly beneficial for use in the invention. In one set of embodiments, the concentration of the AHA will be at least 60 mM, more preferably at least 65 mM, e.g. at least 70 mM. The concentration may range from 60 mM to 120 mM, for example it may be about 100 mM.

Free amino acid levels in vegetables (including tubers) may vary depending on the vegetable variety and storage conditions (including time and temperature of storage). In potatoes, for example, free amino acid levels have been reported to vary from 76 to 333 mmol/kg (mM) (Brierley et al., J. Sci. Food Agric. 70: 515-525, 1996) depending on the potato variety and the conditions of storage. When treating a potato product, the concentration of AHA may be in or above this range, for example, in the range from about 70 to about 300 mM, from 80 to 200 mM, from 90 to 150 mM, or about 100 mM. Lower values may, however, be chosen in order to avoid any acid taste.

When using lactic acid, a concentration in the range of from 30 to 70 mM, e.g. from 40 to 60 mM, has been found to be particularly effective in reducing acrylamide levels whilst also avoiding any unacceptable acid taste.

Acid treatment in accordance with the invention may be carried out in various ways depending on the nature and form of the food product or food ingredient. For example, it may include dipping or soaking of the food or food ingredient in the AHA, or spraying of the AHA onto the food product. Where the food ingredient is to be combined with other food ingredients or additives prior to cooking, the AHA may alternatively be mixed into the food product.

Unless otherwise specified, in any of the uses or methods herein described the α-hydroxy acid may be contacted with a food or food ingredient which is raw (i.e. it is fresh or un-cooked), or it may be contacted with a food or food ingredient which is "part-cooked" as herein defined. Part-cooking not only includes par-frying of a food or food ingredient (e.g. potato batons or strips for use in the preparation of French fries), but may also include other procedures in which a food or food ingredient is partially cooked, such as blanching.

Blanching refers to a short-term heat treatment which is often used as a pre-treatment in the preparation of French fries. It is a process in which a food, such as a vegetable or a tuber (especially raw potato), is contacted with hot (e.g. boiling) water for a short period. As a result of blanching, enzymes (e.g. polyphenoloxidase) are inactivated thereby preventing or minimising discoloration of the food. Reducing sugars are leached off to minimise the amount of sugar available for acrylamide formation. Native pectin methyl esterase is activated to reduce cross-linking of pectin, and free carboxyl groups may react with calcium or magnesium liberated from starch granules after gelatinization to form a thermostable pectin network. Blanching also serves to minimise any changes in texture and taste of the food. Depending on the raw material and the shape and size of the food pieces, blanching parameters may vary but can readily be determined by those skilled in the art.

In one embodiment, blanching may be carried out by submerging of the food in hot or boiling water, removing the food after a brief interval, and then plunging it into cold water (e.g. iced water) or placing it under cold running water to stop the cooking process. As an alternative to the use of boiling water, steam treatment may also be used in the blanching process. Cool air may be used instead of water to halt the cooking process.

In an industrial process, such as that used to produce par-fried potatoes, blanching typically takes place as part of the continuous process as the potatoes move through a water bath or through a steam chamber.

In any of the methods herein described relating to the preparation of French fries, the potato (or sweet potato) may be subjected to blanching prior to AHA treatment and part-cooking. Blanching may be carried out by steam treatment or by contacting the potato or sweet potato with water at a temperature in the range of from 65 to 100°C for a period of from 20 seconds to 25 minutes. The precise conditions for blanching may be varied depending on the size and cut of the product and can be suitably selected by those skilled in the art. In the industrial production of par-fried potatoes, blanching is considered an essential part of the process.

AHA treatment may be carried out at a temperature in the range from 0 to 100°C, preferably from 20 to 95°C, e.g. from 30 to 80°C. In the case of a food product which is blanched prior to cooking, AHA treatment may be carried out as part of the blanching process, e.g. AHA treatment and blanching may be carried out simultaneously.

Treatment with the AHA as herein described may involve contact with an aqueous medium containing the AHA for up to 4 hours, e.g. from 5 seconds to 3 hours, or from 10 seconds to 2 hours. Preferably, however, AHA treatment will involve contact for shorter periods of time, for example up to 10 minutes, e.g. up to 5 minutes, preferably from 1 second to 1 minute, e.g. from 10 seconds to 1 minute, more preferably from 20 to 45 seconds, e.g. about 30 seconds. In one embodiment, treatment may be carried out for a period of from 30 to 45 seconds. In another embodiment, the treatment may be carried out for a few seconds, e.g. as short as 1 to 2 seconds, for example by dipping into and immediately out of the AHA solution. Use of an AHA for shorter periods has the benefit of minimising its impact on the organoleptic properties (especially taste) of the cooked product.

The inventors have surprisingly found that AHA treatment of food products as herein described may be carried out for short periods whilst still giving rise to an acceptable reduction in acrylamide on cooking. In particular, they have found that a short contact time with the AHA, e.g. a contact time of 2 minutes or less, e.g. 1 minute or less, may be adequate.

In certain embodiments, AHA treatment in any use or method as herein described is carried out for a period of up to 2 minutes, preferably up to 1 minute, e.g. up to 50 seconds, up to 45 seconds, or up to 40 seconds. Where any method involves more than one AHA treatment step (e.g. methods involving "twice-cooking" in which a food product is contacted with an AHA treatment solution prior to each cooking stage), at least one of these steps may be carried out for a short contact time as described above. In an embodiment, all steps which comprise treatment of the food with an AHA may be carried out for a short contact period as discussed herein.

Surprisingly, the inventors have found that acrylamide can be effectively reduced when subjecting a part-cooked food (e.g. a potato product such as French fries) to rapid treatment with an AHA as herein described prior to final cooking (e.g. by finish-frying). Rapid treatment involves a short contact time between the part-cooked food and the AHA treatment solution and may, in some embodiments, involve a contact time as low as about 1 second. In other embodiments, the contact time in this stage of the process may be up to 2 minutes, up to 1 minute, up to 30 seconds, up to 25 seconds, up to 20 seconds, up to 15 seconds, up to 10 seconds, up to 5 seconds, or up to 2 seconds, for example, it may range from 1 second to 2 minutes, from 5 seconds to 1 minute, from 10 seconds to 30 seconds, or from 15 seconds to 25 seconds. Short contact times may be achieved by rapid dipping of the part-cooked food into an AHA-containing treatment solution as herein described. Alternatively, a short burst of spraying of the part-cooked food with the AHA treatment solution can provide a suitably short contact time.

The amount of AHA used in any of the methods herein described will depend on the selected AHA, its concentration and other factors such as the food product, its carbohydrate and/or asparagine content. Suitable amounts may readily be determined by those skilled in the art, taking into account factors such as its after-taste, if any. In treating the food product, it is important that the entire surface of the product should be contacted with the AHA. Complete coverage of the food product, whether by spraying, soaking or immersion (e.g. dipping) in a solution of the AHA is therefore preferred.

In one embodiment, the amount of AHA may be selected according to the determined free amino acid content of the food product. For example, the AHA may be used in a molar ratio (AHA : free amino acid) of from 1:1 to 10:1, preferably from 1:1 to 5:1, more preferably from 1:1 to 3:1, e.g. about 2:1. In another embodiment, the amount of AHA may be selected according to the determined asparagine content of the product. Suitable molar ratios (AHA : asparagine) may similarly range from 1:1 to 10:1, preferably from 1:1 to 5:1, more preferably from 1:1 to 3:1, e.g. about 2:1.

Following AHA treatment, the food product should typically be cooked immediately, generally within a period of no longer than about 1 hour, preferably within about 30 minutes, more preferably within about 15 minutes, e.g. about 5 minutes. The AHA should remain on the surface of the food product immediately prior to cooking and it is important that this should not be removed, for example by rinsing (e.g. by washing with water). If desirable, excess AHA may be removed by gentle shaking of the food product, but generally any shaking should be kept to a minimum.

After the AHA treatment and prior to cooking, the product may be dried to remove surface water and thus increase the surface concentration of AHA. Removal of water also has the advantage that it avoids contamination of any oil which may be used for cooking, e.g. oil used for par-frying or deep frying of the product. This preserves the oil and may provide a crisper product on frying. Drying may be carried out using any conventional methods and apparatus, such as a tunnel dryer through which the product may pass following AHA treatment. The duration and temperature for drying may readily be selected by those skilled in the art. Typically the timing for drying may range from a few seconds up to about 60 minutes, preferably from a few seconds up to about 30 minutes, e.g. from 20 to 30 minutes. In one embodiment, the AHA treatment step may thus be considered to comprise a dipping step (e.g. dipping in the AHA solution for 1 second to 10 minutes), followed by a drying step (e.g. 1 second to 30 minutes).

The food product may be cooked using conventional cooking techniques in which the food product is exposed to high temperatures at which the Maillard reaction would be expected to occur, typically above 120°C, e.g. above 150°C. Cooking temperatures may range from 120°C to 250°C, e.g. from 150 to 200°C. Cooking methods will depend on the nature of the food product, but may include frying (e.g. par-frying, deep frying, stir-frying, pan-frying, etc.), baking, grilling, toasting and roasting.

Cooking may be a single-stage process involving a single high temperature cooking step. However, in some cases it may involve a multi-stage (e.g. two-step) cooking process. Where more than one cooking step is involved, the AHA treatment described herein should be carried out prior to the first high temperature cooking step. In some embodiments, the treatment may be repeated prior to the second (or further) cooking processes.

Multi-stage cooking processes are typically used when preparing deep-fried food products, such as French fries. Such products may be treated according to the methods herein described, part-cooked, transported and/or stored, then cooked again. The method of the invention is particularly suitable for the preparation of French fries and other food products which involve an initial par-frying step followed by a final finishing stage in which the product is cooked again. The finishing stage of the cooking process may be carried out by the consumer or in a restaurant or other catering institution.

Part-cooked products may be refrigerated or may be frozen prior to final cooking. Storage under refrigerated conditions may be for up to 7 days, for example from 30 minutes to 24 hours, e.g. for 1 to 6 hours, prior to cooking. When frozen, the food product may be stored for longer periods, for example up to several months or years.

In any method in which a food product is subjected to more than one AHA treatment, for example when preparing French fries or any other food product which is 'twice-cooked', the product may be dried to remove surface water after at least one of the AHA treatment steps. In one embodiment, drying may be carried out after each AHA treatment step. In the context of a 'twice-cooked' product, a part-cooked product will typically be produced in an industrial setting (e.g. in a food factory) in which any drying step may be carried out using any suitable industrial dryer, e.g. a tunnel dryer through which the product passes after treatment with a solution containing the AHA. The finishing stage of the cooking process and any final AHA treatment step may be carried out in a restaurant or other catering institution, or may be done at home by a consumer. In this finishing stage the frozen, part-cooked, food product will typically be taken straight from the freezer, subjected to AHA treatment and then subjected to final cooking, e.g. by deep frying. The food product may be subjected to AHA treatment once thawed, but more typically it may be treated whilst still frozen. In one embodiment, drying may also be carried out after this final AHA treatment step and prior to final cooking. Drying may be effected by any suitable means, e.g. by placing the treated product in a low temperature oven for a short period (e.g. up to 5 minutes, or up to 2 minutes). Drying may also be carried out by subjecting the treated product to a stream of warm or hot air, e.g. for a period of up to 5 minutes, or up to 2 minutes. Alternatively, instead of drying, the product may be subjected to gentle shaking or centrifugation to remove excess AHA solution before final cooking.

Foods and food ingredients to which the methods herein described may be applied include any kinds of foods in which acrylamide can be formed during heat treatment. Generally, they will contain amino acids (e.g. asparagine) and sugars that, upon heat treatment, form acrylamide. Food products which may be treated in accordance with the invention include any carbohydrate-containing food material. Typically it will be a plant or plant-derived food or food ingredient, e.g. a vegetable, a tuber or a cereal (e.g. rice, barley, wheat, rye, oat, maize, etc.). For example, it may be a root vegetable (e.g. a sweet potato) or a tuber (e.g. a potato). Examples of foods include vegetables and tubers such as potato, sweet potato, yam, onion, carrot, swede, turnip, parsnip, celeriac and beetroot. These will typically be processed prior to AHA treatment and cooking, e.g. peeled, diced, sliced, chipped, chopped, crushed, or any combination thereof.

The methods of the invention are also particularly suitable for use in respect of foods which are made from vegetables, tubers or cereal flours, granulates or fragments thereof. Such products include pasta, breads, crisp-breads, biscuits (known in the United States as "cookies"), wafers, crackers, cakes, crisps (known in the United States as "chips"), pretzels, breakfast cereals, coffee beans and granulated coffee, cocoa, etc. Where the carbohydrate-containing plant material is granulated or fragmented prior to use, it may be mixed with other non-treated food materials, e.g. other granulated material, before cooking. The nature and amount of any other non-acid treated food materials will depend on the final food product and can readily be determined. The term "granulate" as used herein is intended to refer to fine or coarse particulates, e.g. flours, granules, grits, fragments, etc. These may, for example, be 2 mm or less in maximum dimension.

Specific examples of foodstuffs which are produced by food processing steps which are susceptible to the formation of acrylamide are listed in Article 1 of EU Regulation No. 2017/2158:
(a) French fries, other cut (deep fried) products and sliced potato crisps from fresh potatoes;
(b) potato crisps, snacks, crackers and other potato products from potato dough;
(c) bread;
(d) breakfast cereals (excluding porridge);
(e) fine bakery wares: cookies, biscuits, rusks, cereal bars, scones,cornets, wafers, crumpets and gingerbread, as well as crackers, crisp breads and bread substitutes. In this category a crackers is a dry biscuit (a baked product based on cereal flour);
(f) coffee
   (i) roast coffee
   (ii) instant (soluble) coffee;
(g) coffee substitutes; and
(h) baby food and processes cereal-based food intended for infants and young children.

The methods herein described may be used in the preparation of any of the above described foodstuffs.

Once cooked, the food may be further processed, e.g. by conventional means. For example, where the product is coffee beans, it may be further processed to produce dried, granulated instant coffee, or liquid coffee extracts.

Following cooking and any additional processing steps, the food may be packaged, e.g. into sealed and, preferably sterilised, containers (e.g. bags, cartons, plastic or foil bags, bottles, etc.). Such containers will generally be impermeable to moisture.

Also described herein is a container containing a food or food ingredient produced according to any of the methods herein described.

Other foods which may be treated according to the invention include those which are reconstituted from such materials, e.g. potato croquettes, extruded potato products such as crisps or chips, etc. Also described herein is a process for the preparation of a food which comprises granulated or crushed carbohydrate-containing plant material, said process comprising contacting said plant material with an AHA as herein described, optionally formulating said material into a shaped product (e.g. by extrusion, rolling or moulding a paste or dough), and cooking to produce said food.

Where appropriate, the foods produced according to the invention may be further processed following cooking. For example, these may be processed by drying, freezing, cutting, decorating, etc. Such steps form further optional steps in any of the methods herein described.

The methods of the invention are particularly suitable for use in the production of French fried potatoes, for example in the production of part-cooked French fries which are provided to the customer in part-cooked form prior to final cooking. Final cooking may involve baking where the product is an "oven-ready" French fried potato, or it may involve deep frying where the product is to be served in a restaurant or sold in a fast-food outlet. As described herein, the part-cooked product may be subjected to further AHA treatment in accordance with the invention prior to the final cooking step. The inventors have found that further AHA treatment prior to the final cooking step is particularly advantageous in reducing acrylamide levels and, in one embodiment, that this may be carried out for a short contact time as described herein.

Also described herein is a method for the preparation of ready-to-cook (e.g. oven-ready or ready-to-fry) French fried potatoes, said method comprising the step of chopping potatoes, treating the chopped potatoes with an AHA as herein described, part-cooking (e.g. frying) the AHA-treated potatoes, and optionally packing the fried potatoes into a sealed container (e.g. a bag). Typically, the part-cooked French fries will be frozen prior to packaging.

In this process, chopping will typically produce batons having a cross-sectional width of about 0.5 to about 20 mm, preferably about 0.5 to about 10 mm, e.g. about 1 to about 5 mm.

In the preparation of French fried potatoes, the steps which may be carried out prior to AHA treatment in accordance with the invention will generally comprise: washing, peeling and chopping to produce batons or strips. In some cases, an additional blanching/washing step may be carried out in which the chopped potato is either rinsed with water or blanched in water at elevated temperatures. Typically blanching may be carried out at a temperature in the range of from 65 to 100°C, e.g. 80 to 95°C. Blanching times may range from 20 seconds to 25 minutes, e.g. 5 minutes to 20 minutes.

In one set of embodiments, the inventors have found that the methods herein described may be carried out without the need for any pre-treatment step of washing or blanching of the cut potato product prior to AHA treatment and par-frying. This serves to minimise the loss of potato product. In an industrial process for the production of par-fried potatoes, however, it is envisaged that a blanching step will be carried out.

In certain embodiments, the preparation of French fries in accordance with the methods herein described may comprise the following steps:

### Factory processing (par-frying):

Raw potatoes - peel - cut - blanch - AHA treatment (e.g. dip/spray) - dry - par-fry - freeze - store/package

### At home/restaurant/catering (final frying)

Frozen par-fried potatoes - thaw (optional) - AHA treatment (e.g. dip/spray) - dry (optional) - final fry

Several methods for the preparation of home-cooked French fries from raw potatoes are used in different countries. The methods may include a single frying step, or the potatoes may be fried twice. Further, the potatoes may be rinsed in one or several batches of water, and dried or not prior to deep frying. Any of these methods may be modified to incorporate the AHA treatment (or AHA treatments) as herein described. When modifying some home-cooking methods, the inventors have found surprisingly low acrylamide levels can be achieved, e.g. close to the analytical detection limits.

One method of preparing French fries at home involves a single, high temperature frying step in which frying is carried out for a sufficient period of time to "cook" the raw potato batons or strips. In a modification of this method, it is proposed that the cut potato batons or strips should be subjected to AHA treatment as herein described prior to high temperature frying.

An alternative home cooking method which is used in the preparation of French fries includes a "twice-cooking" method which comprises par-frying and finish frying steps. In this method, the cut potato batons or strips are rinsed in water multiple times prior to the step of par-frying. In a modification of this method, the inventors propose that the final washing step is replaced by an AHA treatment step as herein described. Alternatively, it is proposed that all rinsing steps may be replaced with a single AHA treatment step as herein described. As a further modification, an additional AHA treatment may also be carried out in respect of the par-fried product prior to finish frying. This has the advantage of a further reduction in acrylamide on cooking.

French fries are generally made from chopped potatoes. However, they may also be made from extruded or moulded carbohydrate-containing pastes, e.g. from pastes produced from powdered or granulated potato and/or cereal (e.g. rice).

The methods herein described are also suitable for use in the production of vegetable and potato crisps (also known in the United States as "chips"). For use in the production of such foods, the sliced vegetable or potato will typically be subjected to AHA treatment as herein described prior to deep frying. One advantage of the methods herein described is that these enable the production of crisps ('chips') from a wider variety of vegetables, especially root vegetables which have a higher sugar content. For example, the methods will enable the production of crisps ('chips') from vegetables such as carrots, celeriac, and parsnips.

Consumer demand for French fries and crisps produced from carotene-rich sweet potato has increased in recent years. Sweet potato is a root vegetable and this may be prepared, treated with an AHA and cooked in the same way as any potato product as herein described. For example, it may be chopped to produce batons or strips which are then subjected to AHA treatment prior to part-cooking. Prior to finish frying an additional AHA treatment step may also be carried out. Alternatively, the sweet potato may be sliced, subjected to AHA treatment as herein described, then deep fried to produce a sweet potato crisp.

Potatoes treated according to the invention may be any variety grown or used in any country of the world, although those having a higher level of reducing sugars will benefit most from the invention. Potato varieties include, but are not limited to, any of the following: Asterix, Peik, Maris Piper, Beate, Russet, Saturna, King Edward, Russet Burbank, Bintje, Shepady, Shasta, Pentland Dell, Record, especially Asterix and Maris Piper. Preferably, the potatoes may be of a variety having a reducing sugar content in the range of up to 10 wt.%, particularly up to 5 wt.%, e.g. up to 3 wt.%. As will be understood, different potato varieties may be preferred for use in the production of crisps ('chips') vs. French fries. However, one advantage of the methods herein described is that these open up the possibility of using more varieties of potatoes in the production of these food products, especially in the production of French fries.

The foods herein described may optionally contain further components, such as conventional foodstuff ingredients or additives, e.g. salt, sugars, flavourings, fruit, fruit extracts, nuts, eggs, milk, flour, bread, breadcrumbs, stabilizers, colours, buffers, acidulants, yeast, raising agents (e.g. bicarbonate), etc.

The invention also extends to the use of mixtures of AHAs. Any use or method as herein described can involve the use of an AHA treatment solution comprising two or more (e.g. two or three) AHAs. When used in combination, two or more AHAs having different pKₐ values may be provided in an aqueous treatment solution at a selected pH. The pH of the treatment solution will preferably be selected such that at least 50%, e.g. at least 60%, at least 70%, at least 80% or at least 90% of all AHAs are present in non-dissociated form. For example, the pH of the solution may be at or below the lowest pKₐ value of all AHAs present in the solution.

Where a mixture of AHAs is used, these may be selected from any of the following: lactic acid, malic acid, tartaric acid, citric acid, ascorbic acid, glycolic acid and glucono-delta lactone. Mixtures of AHAs which include two or more acids selected from lactic acid, malic acid, tartaric acid and citric acid, for example two or more acids selected from lactic, malic and tartaric acids, are particularly preferred. Non-limiting examples of mixtures of AHAs for use in the invention include the following: lactic acid and malic acid; lactic acid and tartaric acid; malic acid and tartaric acid; lactic acid, malic acid and tartaric acid. A preferred combination of AHAs for use in the invention is lactic acid and malic acid.

AHAs have their own characteristic taste and, in some cases, the upper limit for the concentration of a given AHA may be restricted due to its taste in the final product. The concentration of any individual AHA may be selected according to its taste. Use of a mixture of AHAs may nevertheless be beneficial in this situation and may result in an effective reduction in any "off-taste" (e.g. bitter, sour, chemical, or acidic taste) in the final product. When using any mixture of AHAs, the total concentration for all AHAs may be selected based on the same considerations as set out herein in respect of the use of a single AHA. For example, the total concentration of all AHAs in any treatment solution may range from 1 to 500 mM, e.g. from 10 to 400mM, from 20 to 350 mM, or from 30 to 300 mM. In one embodiment, the total concentration of all AHAs in the solution may range from about 70 to about 300 mM, preferably from about 80 to 200 mM, more preferably from about 90 to 150 mM, e.g. about 100 mM.

The AHAs for use in the invention may be used in combination with other conventional food additives or treatment agents. For example, the AHA treatment solution may additionally contain any of the following: processing aids, flavouring agents, colouring agents, stabilising agents, buffers, salts, and sugars (e.g. dextrose). Where present, the amounts of these components may readily be determined by those skilled in the art.

In the industrial processing of French fries, calcium lactate and disodium pyrophosphate (also known as sodium acid pyrophosphate or "SAPP") are used as processing aids. Ca²⁺ ions contribute to crisp fried products by interacting with the pectin of the potatoes, while SAPP is used to prevent after-cooking darkening by binding ferrous iron. Calcium lactate and/or SAPP may also be present in any of the AHA treatment solutions for use in the invention. Typical concentrations of calcium lactate may range from 0.2 to 0.7% by weight. A typical concentration of SAPP may range from 0.2 to 0.8 % by weight.

Both SAPP and Ca-lactate dissociate when mixed with water. They form free ions, the extent of which depends on the pH of the solution. When acids (e.g. lactic acid) are added to Ca-lactate in solution, the pH is lowered and Ca-lactate, in particular, will influence the pH of the solution (since one molecule of Ca-lactate releases two molecules of lactate). When Ca-lactate is present this will also contribute to the total amount of lactic acid. The amount of added Ca-lactate and selected AHA may be selected accordingly. Lowering of the pH to minimise the extent to which lactic acid molecules provided by the Ca-lactate are present in dissociated form can generally be achieved by combining the Ca-lactate with one or more AHAs as herein described.

It is envisaged that in certain embodiments the AHA treatment herein described may be carried out in the absence of additional processing aids such as Ca-lactate and SAPP. In industrial processing of food products, this has the advantage of reducing the overall cost of the process. In certain embodiments of the invention therefore, contact of the food with any AHA is carried out substantially in the absence of any additional calcium lactate and/or SAPP. For example, the AHA treatment solution may contain less than 0.1% by weight, e.g. less than 0.05% by weight of calcium lactate. The AHA treatment solution may also contain less than 0.1% by weight, e.g. less than 0.05% by weight of added SAPP. Preferably it will be free from any calcium lactate and/or SAPP.

Non-limiting examples of foods, their preparation and treatment conditions in accordance with specific embodiments herein described include the following:

**Preparation of French fries:**

| | |
|---|---|
| Food: | potato |
| Preparation: | peeled and chopped to produce batons |
| Blanching (optional): | 95°C for 5 minutes |
| AHA (e.g. dipping in AHA): | lactic acid, malic acid or tartaric acid, preferably lactic acid |
| pH of AHA solution: | pKₐ of the AHA - 1 (± 0.5) |
| Conc. of AHA solution: | 30 to 150 mM, e.g. from 40 to 100 mM |
| AHA treatment time: | up to 60 seconds, e.g. up to 30 seconds |
| Drying (optional): | 10 minutes at 60°C |
| Frying/cooking: | par-frying at a temperature from 170 to 190°C, e.g. from 175 to 185°C, preferably for a period from 1 to 5 minutes, e.g. from 2 to 4 minutes. |
| | Oven cooking (e.g. from frozen) at a temperature from 180 to 240°C, e.g. from 190 to 230°C, preferably for a period of from 5 to 25 minutes, e.g. from 5 to 10 minutes |
| Storage (after par-frying): | Packaging in airtight container, preferably then subjected to freezing. |

**Preparation of French fries:**

| | |
|---|---|
| Food: | potato or sweet potato |
| Preparation: | peeled and chopped to produce batons |
| Blanching (optional): | 95°C for 5 minutes |
| AHA (e.g. dipping in AHA): | lactic acid, malic acid or tartaric acid, preferably lactic acid |
| Par-frying: | |
| pH of AHA solution: | pKₐ of the AHA - 1 (± 0.5) |
| Conc. of AHA solution: | 30 to 150 mM, e.g. from 40 to 100 mM |
| AHA treatment time: | up to 60 seconds, e.g. up to 30 seconds |
| Drying: | 10 minutes at 60°C |
| Frying: | par-frying at a temperature from 170 to 190°C, e.g. from 175 to 185°C, preferably for a period from 1 to 5 minutes, e.g. from 2 to 4 minutes. |
| Storage: | Packaging in plastic bags, freezing at -20°C |
| Final frying: | Removal from freezer |
| AHA (e.g. dipping in AHA): | lactic acid, malic acid or tartaric acid, preferably lactic acid |
| pH of AHA solution: | pKₐ of the AHA - 1 (± 0.5) |
| Conc. of AHA solution: | 20 to 150 mM, e.g. from 40 to 100 mM |
| AHA treatment time: | 1- 60 seconds, e.g. up to 30 seconds |
| Shaking: | 10 seconds |
| Final frying | Deep frying at 175-185°C for 2 to 8 minutes |

**Preparation of sweet potato fries:**

| | |
|---|---|
| Food: | sweet potato |
| Preparation: | peeled and chopped to produce batons |
| Blanching (optional): | 95°C for 5 minutes |
| AHA (e.g. dipping in AHA): | lactic acid, malic acid or tartaric acid, preferably lactic acid |
| pH of AHA solution: | pKₐ of the AHA - 1 (± 0.5) |
| Conc. of AHA solution: | 30 to 150 mM, e.g. from 40 to 100 mM |
| AHA treatment time: | up to 60 seconds, e.g. up to 30 seconds |
| Frying/cooking: | par-frying at a temperature from 170 to 190°C, e.g. from 175 to 185°C, preferably for a period from 1 to 5 minutes, e.g. from 2 to 4 minutes. |
| | Oven cooking at a temperature from 180 to 240°C, e.g. from 190 to 230°C, preferably for a period of from 5 to 25 minutes, e.g. from 5 to 10 minutes. |

**Preparation of carrot and other vegetable/tuber crisps:**

| | |
|---|---|
| Food: | carrot or other vegetables/tubers (e.g. parsnips, potatoes, celeriac, sweet potato) |
| Preparation: | peeled and sliced |
| AHA (e.g. dipping in AHA): | lactic acid, malic acid or tartaric acid, preferably lactic acid |
| pH of AHA solution: | pKₐ of the AHA ± 0.5, or < pKₐ of the AHA, e.g. pKₐ of the AHA - 1 (± 0.5) |
| Conc. of AHA solution: | 10 to 40 mM, e.g. about 20 mM |
| AHA treatment time: | 1 to 3 hours, e.g. about 2 hours, or Lower treatment times, e.g. up to 10 minutes |
| Cooking: | deep frying at a temperature from 160 to 180°C, e.g. about 170°C, preferably for a period of from 1 to 3 minutes, e.g. about 2 minutes. |

The invention will now be illustrated further with reference to the following examples. Examples 1-7 and 9 do not form part of the invention as claimed.

### Examples

### Example 1 - French fries

### Ingredients:

Potatoes: Asterix variety (glucose content: 20-27 mM)
Frying oil: High oleic acid rapeseed oil

### Pre-treatment of potatoes:

The raw potatoes were washed in water and the skin removed by cutting off the sides to produce skin-free cubes (approx. 5 x 7 cm). The cubes were divided using a cutter into 1 x 1 cm rods. The rods were transferred to a container filled with sufficient tap water to cover the rods.

Batches of rods (approx. 200 g) were blanched for 5 minutes in water at 100°C before being submerged in a dipping solution at 60°C for 30 seconds. Each dipping solution contained one inhibitor to be tested. All dipping solutions contained the same molar concentration (100 mM) of the inhibitor. All dipping solutions were adjusted to a pH of 2.29 using either HCl or NaOH prior to use. In each case the pH was more than one unit lower than the (lowest) pKa of the α-hydroxy acid.

As a control, dipping was also carried out in hydrochloric acid (pH 2.29) and in water (pH not adjusted).

### Par-frying:

Par-frying was performed in oil at 175-185°C for 2 minutes 45 seconds. The par-fried samples were allowed to cool, packed in plastic bags and frozen.

### Oven cooking:

Four days later, the frozen samples were heated in a hot air oven at 225°C for 7 minutes. Each sample was placed in the middle of a pan in the middle of the oven. Samples were packed and frozen prior to colour and acrylamide analyses.

### Analyses:

Acrylamide content was determined by an accredited laboratory using GC-MS and acrylamide as an internal standard.

Colour was analysed as Lab-values using a Digieye instrument. Colour standards for frozen French fried potatoes (USDA, 5^{th} Ed. 2007) were used as a comparison.

### Results:

**Table 1**

| **Inhibitor Functionality** | **Inhibitor Compound (100 mM)** | **pH** | **Reduction in acrylamide (%)** | **L* value^{1,2}** |
|---|---|---|---|---|
| α-hydroxy acid | Lactic acid | 2.29 | 82 | 71.2 |
| α-hydroxy acid | Glycolic acid | 2.29 | 89 | 70.0 |
| α-hydroxy acid | Malic acid | 2.29 | 84 | 71.6 |
| Inorganic acid | Hydrochloric acid | 2.29 | 64 | 74.7 |
| Control | Water | 7.61 | 0 | 65.1 |

| | | | | |
|---|---|---|---|---|
| ¹L* = 100 is white, L* = 0 is black, i.e. the higher the L* value, the lighter the sample. ²Colour standards for frozen French fried potatoes (USDA, 5^{th} Ed. 2007): Colour std. 2: 84.5; Colour std. 3: 71.63; Colour std. 4: 63.55 | | | | |

### Conclusions:

From the results it can be seen that dipping in the α-hydroxy acids compared to water had a profound effect in lowering acrylamide in the deep fried potatoes. The effect from the α-hydroxy acids was considerably higher than that with hydrochloric acid.

### Example 2 - French Fries - lactic acid and effect of pH

The conditions in this experiment were identical to those in Example 1 except for the changes noted below:
- All dipping solutions contained the same molar concentration (40 mM) of inhibitor (lactic acid).
- The pH of each dipping solution was adjusted to the target pH with 0.1 N HCI or 0.1 N NaOH.
- Par-frying was carried out for a period of 3 minutes 30 seconds at 185°C.
- The potato variety used was Peik. Glucose levels of the potatoes averaged 0.28% (15.5 mM).

### Effect of pH:

The pKₐ value of lactic acid is 3.86. The pH values of the dipping solutions were chosen as pKₐ - 2 (1.86), pKₐ -1 (2.86), and pKₐ (3.86).

### Results:

The effect of pH of the lactic acid dipping solution on acrylamide levels in French fries following par-frying and cooking of frozen samples is shown in Table 2.

**Table 2**

| **Dipping solution** | **Concentration mM** | **Target pH pKₐ - x** | **Actual pH** | **Acrylamide µg/kg** | **Reduction in acrylamide (%)** |
|---|---|---|---|---|---|
| Water (control) | 0 | | 7.32 | 570 | 0 |
| Lactic acid (pKa-2) | 40 | 1.86 | 1.62 | 280 | 50.9 |
| Lactic acid (pKa-1) | 40 | 2.86 | 2.69 | 250 | 56.1 |
| Lactic acid (pKa) | 40 | 3.86 | 3.57 | 370 | 35.1 |

### Conclusions:

The samples treated with a lactic acid dipping solution having a pH lower than the pKₐ gave the lowest acrylamide levels following par frying and cooking. At these pH levels the concentration of undissociated lactic acid is far greater than 50% of the total lactic acid concentration. With less undissociated lactic acid present (pH equal to the pKₐ), the effect of lactic acid in preventing the formation of acrylamide is considerably lower.

The results are surprising since the formation of acrylamide has previously been linked to the protonation of asparagine which is considerable (50%) even at a pH as high as 8.8 (asparagine pKₐ₁ = 8.80, pKₐ₂ = 2.02).

### Example 3 - French fries

The conditions in this experiment were identical to those in Example 1 except for the changes noted below:
- All dipping solutions contained the same molar concentration (40 mM) of inhibitor.
- The pH of each dipping solution was adjusted to a target pH with 0.1 N HCI or 0.1 N NaOH.
- Par frying was carried out for a period of 3 minutes 30 seconds at 185°C.
- The potato variety was Peik. Glucose levels of the potatoes averaged 0.28% (15.5 mM).

### Effects of chemical structure:

Compounds with chemical structures similar to lactic acid, i.e. the presence of one or more hydroxyl groups, were tested as inhibitors for the formation of acrylamide. All acids were tested at a pH approximately one unit lower than their pKₐ or their lowest pKₐ (i.e. pKₐ - 1, or pKₐ₁ - 1).

### Results:

**Table 3**

| **Dipping solution** | **Concentration mM** | **Target pH pKₐ - 1** | **Actual pH** | **Acrylamide µg/kg** | **Reduction in acrylamide (%)** |
|---|---|---|---|---|---|
| Water (control) | 0 | | 7.32 | 570 | - |
| Hydrochloric acid (control) | 40 | | 2.98 | 610 | -7 (increase) |
| Lactic acid | 40 | 2.86 | 2.69 | 250 | 56 |
| Malic acid | 40 | 2.40 | 2.42 | 300 | 47 |
| Tartaric acid | 40 | 1.98 | 1.91 | 340 | 40 |
| Citric acid | 40 | 2.13 | 1.99 | 310 | 46 |
| Ascorbic acid | 40 | 3.17 | 2.73 | 300 | 47 |
| Glycolic acid | 40 | 2.83 | 2.64 | 370 | 35 |

### Conclusions:

The results clearly and surprisingly demonstrate that the α-hydroxy acids: lactic acid, malic acid, tartaric acid, citric acid, ascorbic acid, and glycolic acid are particularly effective in the reduction of acrylamide when used at the selected pH. Hydrochloric acid failed to act as an inhibitor for acrylamide formation, surprisingly demonstrating that the inhibition reaction is not solely affected by the low pH.

### Example 4 - Carrot chips

### Materials and methods:

Carrots were obtained from a commercial grower in Norway. Palm oil was used for frying. Lactic acid and hydrochloric acid were obtained from Sigma. The following brines were used:

| | |
|---|---|
| Lactic acid: | 20 mM lactic acid in 1% NaCl, pH = 3.9 |
| Hydrochloric acid: | 20 mM HCI in 1% NaCl, pH = 3.5 |
| Control: | Water, pH = 7.1 |

### Pre-treatment of carrots:

Carrots were peeled and sliced to 1.5 mm thickness using a Robot Vertical Cutter 2 (Robot Coupe SA, Le Perreux, France). The carrot slices (500 g) were immediately added to one of the brines (1 L) and left at room temperature for 2 hours prior to deep frying. The control samples were rinsed in water and deep fried without delay.

### Deep frying:

The carrot slices were deep fried as 150 g portions in palm oil at 170°C for 2 minutes 15 seconds.

### Analyses:

Dry matter was determined in a vacuum oven at 70°C overnight.

Soluble solids in the raw carrots were determined as °Brix using a Mettler Toledo RE40 refractometer. Samples were homogenized and a few drops of the homogenates were applied on the refractometer. °Brix is given as g sucrose/100 g sample.

Accredited analyses (GC/MS) of acrylamide were performed using acrylamide as an internal standard.

### Results:

The °Brix value of the carrots used for the experiments was 7.8.

Results from analyses of deep fried products soaked in acid prior to deep frying are shown in Table 4.

**Table 4**

| **Carrot chips** | **Acid concentration mmol/l** | **Dry matter of fried product g/100 g** | **Acrylamide content of fried product µg/kg** | **Acrylamide reduction %** |
|---|---|---|---|---|
| Untreated (control) | 0 | 97.2 | 690 | 0 |
| Lactic acid | 20 | 96.2 | 260 | 62 |
| Hydrochloric acid | 20 | 96.9 | 490 | 29 |

### Conclusions:

All carrot samples were deep fried for the same period of time, rather than being deep fried until a certain product colour. Any difference in acrylamide levels thus reflects the ability of each treatment to prevent the formation of acrylamide on deep frying.

As the results show, soaking in lactic acid compared to rinsing in water had a profound effect in lowering acrylamide in the deep fried carrot chips. The effect from lactic acid was considerably higher than the effect from treatment with hydrochloric acid.

### Example 5 - Sweet potato fries

### Materials:

Sweet potatoes were obtained from a local grocery. The material originated from the USA. Palm oil was used for frying. Lactic acid was obtained from Sigma.

### Treatment:

1x1 cm sticks of sweet potato were blanched in water at 100°C for 5 minutes, dipped in water or 40 mM lactic acid at 60°C for 40 seconds, dried at 60°C for 10 minutes, and deep fried in palm oil at 180°C for 2 minutes 40 seconds. The sticks were then frozen. The frozen sticks were subsequently heated in an oven at 225°C for 12 minutes.

Acrylamide levels of the final products were determined by an accredited laboratory using GC-MS and acrylamide as an internal standard.

### Results:

**Table 5**

| **Sweet potatoes** | **Dipping solution** | **pH of dipping solution** | **Acrylamide content of fried product µmol/kg** | **Acrylamide reduction %** |
|---|---|---|---|---|
| Untreated (control) | water | 7.10 | 570 | - |
| Lactic acid | 40 mM lactic acid | 2.68 | 280 | 51 |

### Conclusion:

The results demonstrate that treatment of blanched sweet potato rods with 40 mM lactic acid (pH 2.68) prior to par-frying resulted in a 51% reduction in the acrylamide level in the finished fries.

### Example 6 - French fries - combination of AHAs

### Materials:

Peik potatoes were obtained for testing. Palm oil was used for frying. Dipping solutions were prepared using lactic acid, malic acid, and calcium lactate from Sigma.

The dipping solutions were combinations of 40 mM (0.36 %) lactic acid, 40 mM (0.54 %) malic acid, 0.5 % (calcium lactate, "CaLA") (2.3 mM) and water. 40 mM lactic acid was prepared by adding 4.5 g 80% lactic acid/I. 40 mM malic acid was prepared by adding 5.36 g malic acid/I.

### Method:

Potatoes were peeled and cut into 250 g batons (1x1 cm), blanched at 100°C for 5 minutes, dipped in water/various dips (60°C for 40 seconds), dried (60°C for 10 minutes) and then fried (180°C for 2 minutes 40 seconds) in palm oil. Two control samples with water as the dip were also prepared. The acrylamide level of the control was calculated as the middle of the two, i.e. 1085 µg/kg.

### Results and Conclusions:

**Table 6**

| **Sample No.** | **Lactic acid** | **CaLA** | **Malic acid** | **Water** | **pH** | **Acrylamide µg/kg** | **Reduction %** |
|---|---|---|---|---|---|---|---|
| 1 | 0 | 0 | 0 | Control | 7.10 | 1200 (x=1085) | |
| 2 | 40mM | 0 | 0 | | 2.59 | 700 | 35 |
| 3 | 40mM | 0.5 % | 0 | | 3.60 | 650 | 40 |
| 4 | 0 | 0.5 % | 0 | | 7.63 | 1000 | 8 |
| 5 | 0 | 0 | 40mM | | 2.63 | 720 | 34 |
| 6 | 0 | 0.5 % | 40mM | | 3.37 | 430 | 60 |
| 7 | 40mM | 0 | 40mM | | 2.51 | 430 | 60 |
| 8 | 0 | 0 | 0 | Control | 7.74 | 970 (x=1085) | |

### Experiment 1 - Effect of lactic acid and malic acid alone and in combination (sample Nos. 2, 5, 7 and controls):

**Table 7**

| **Sample No.** | **Lactic acid (mM)** | **Malic acid (mM)** | **pH** | **Acrylamide µg/kg** | **Reduction %** |
|---|---|---|---|---|---|
| 1 | 0 | 0 | 7.10 | 1085 | |
| 2 | 40 | 0 | 2.59 | 700 | 35 |
| 5 | 0 | 40 | 2.63 | 720 | 34 |
| 7 | 40 | 40 | 2.51 | 430 | 60 |

The results demonstrate that dipping in 40 mM lactic acid or 40 mM malic acid has substantial and comparable effects for reducing acrylamide levels in deep-fried French fries.

The reduction in acrylamide levels corresponds to nearly 35 % of the levels obtained when dipping with water only. Combining the two acids increases the reduction in acrylamide to 60 % of the control with water only.

The increased effect of the two acids in combination suggests that higher concentrations of AHA may be useful in achieving an effective reduction in acrylamide levels.

### Experiment 2 - Calcium lactate (CaLA) as a potential inhibitor of acrylamide formation (Sample Nos. 2, 3, 4, 5, 6 and controls):

**Table 8**

| **Sample No.** | **Lactic acid** | **CaLA** | **Malic acid** | **pH** | **Acrylamide µg/kg** | **Reduction %** |
|---|---|---|---|---|---|---|
| 1 | 0 | 0 | 0 | 7.10 | 1085 | |
| 2 | 40mM | 0 | 0 | 2.59 | 700 | 35 |
| 3 | 40mM | 0.5 % (4.6 mM) | 0 | 3.60 | 650 | 40 |
| 4 | 0 | 0.5 % (4.6 mM) | 0 | 7.63 | 1000 | 8 |
| 5 | 0 | 0 | 40mM | 2.63 | 720 | 34 |
| 6 | 0 | 0.5 % (4.6 mM) | 40mM | 3.37 | 430 | 60 |
| 7 | 40mM | 0 | 40mM | 2.51 | 430 | 60 |

Calcium lactate is used as a processing aid in the French fry industry as a cheap source of calcium ions. Typical concentrations used are 0.2 - 0.7 %. The Ca²⁺ ions react with pectin and aid in producing a 'crisp' product. As calcium lactate contains lactic acid (two molecules per molecule of Ca lactate), it could also be a potential source of lactic acid as an acrylamide inhibitor.

To achieve an acrylamide-lowering effect, the pH of the solution is critical as the lactic acid must be in its non-dissociated form. CaLA dissolved in water gives a pH well above 7. Thus, the dissolved lactic acid molecules will be in the dissociated form. The pH must be lowered if any effect on inhibition of acrylamide is to be achieved. This can be obtained by combining the CaLA with one or more of the AHAs used for reducing acrylamide formation. With only CaLA present the pH is 7.63. When mixed with 40 mM lactic acid, the pH is 3.6 and when mixed with 40 mM malic acid, the pH is 3.37.

With CaLA only, very low (8 %) acrylamide reduction was obtained. In samples with 40 mM lactic acid or malic acid, a 40 and 60 % reduction in acrylamide was obtained, respectively. These samples contained 4.6 mM additional lactic acid.

### Example 7 - French fries - combination of AHAs

### Materials:

Potatoes were obtained from Hoff SA. The potato variety was Peik which has a sugar content of 0.57% and a starch content of 14.85%.

### Method:

Deep fried potato wedges (also known as "potato boats") were processed with various inhibitors (AHAs) to study their inhibiting effects.

The potatoes were sampled after the raw, unpeeled potato wedges had been blanched for 5 minutes at 90°C followed by blanching for 26 minutes at 84°C. The blanched material was then cooled in water. Further processing was done the next day.

Dipping solutions were prepared and kept in a heating cabinet at 60°C overnight. 250 g samples of the potato wedges were dipped for 40 seconds in the various warm (60°C) dipping solutions. The samples were then transferred to a fanned drying cabinet held at 60°C. The samples were dried for 10 minutes. After drying, the samples were deep fried in oil at 188°C for 2 minutes 40 seconds. The temperature fell to 180°C during each frying session.

The par-fried samples were cooled on paper at room temperature, packed in plastic bags, sealed and frozen. For final frying, samples were withdrawn from the freezer, removed from the plastic bags and thawed for 2 minutes on a rotating plate in a microwave oven (800 W). Samples were then spread on a baking sheet and heated for 12 minutes in a convection oven at 225°C.

Fried potato wedges were evaluated for colour according to "Color Standards for Frozen French Fries Potatoes" (USDA, 5^{th} Ed., 2007). Parts covered with potato skins were not evaluated. Samples were also evaluated for the presence of sour taste. Samples were packed in plastic bags, frozen and sent for acrylamide analysis.

The concentrations of inhibitors in the dipping solutions were 10 mmol/l and 40 mmol/l for each inhibitor. The relationship between dip concentration (mmol/l) and % inhibitor in the dips are seen in Table 9 below:

**Table 9**

| **Inhibitor (AHA)** | **Concentration in dip** | |
|---|---|---|
| | **mmol/l** | g/100 g (%) |
| Lactic acid | 40 | 0.36 |
| Malic acid | 40 | 0.54 |
| Tartaric acid | 40 | 0.60 |
| Citric acid | 40 | 0.84 |
| | | |
| Lactic acid | 10 | 0.09 |
| Malic acid | 10 | 0.13 |
| Tartaric acid | 10 | 0.15 |
| Citric acid | 10 | 0.21 |

### Results:

Concentrations (mmol/l, mM) of inhibitors, pH of dips, colour (USDA scale) and acrylamide levels (µmol/kg, ppb) in the deep fried potato wedges are provided in Table 10 below:

**Table 10**

| **Sample No.** | **Lactic acid (LA) mmol/l (mM)** | **Malic acid (MA) mmol/l (mM)** | **Tartaric acid (TA) mmol/l (mM)** | **Citric acid (CA) mmol/l (mM)** | **pH** | **Colour USDA scale** | **Acrylamide µg/kg (ppb)** | **Reduction in acrylamide (%)** |
|---|---|---|---|---|---|---|---|---|
| 1 | 0 | 0 | 0 | 0 | 8.02 | 2-3 | 1200 | - |
| 2 | 40 | 0 | 0 | 0 | 2.68 | 1.5 | 470 | 59 |
| 3 | 40 | 40 | 40 | 0 | 2.18 | 1 | 420 | 63 |
| 4 | 40 | 40 | 40 | 40 | 2.06 | 1 | 420 | 63 |
| 5 | 10 | 10 | 10 | 10 | 2.38 | Weak 1 | 880 | 23 |
| 6 | 0 | 0 | 0 | 0 | 8.01 | 2.5 | 1100 | - |
| 7 | 0 | 40 | 0 | 0 | 2.49 | 1+ | 470 | 59 |
| 8 | 0 | 40 | 40 | 0 | 2.18 | 1 | 540 | 53 |
| 9 | 0 | 40 | 40 | 40 | 2.06 | 1 | 490 | 57 |
| 10 | 0 | 0 | 40 | 0 | 2.30 | 1+ | 810 | 30 |
| 11 | 0 | 0 | 40 | 40 | 2.12 | 1.5 | 670 | 42 |
| 12 | 0 | 0 | 0 | 40 | 2.28 | 1- | 510 | 56 |
| 13 | 10 | 0 | 0 | 0 | 3.03 | 1 - 0 | 700 | 39 |
| 14 | 0 | 0 | 10 | 0 | 2.70 | 1+ | 1200 | -4 (increase) |

### Conclusions:

The best combinations of AHAs (2 combinations) revealed more than 60 % inhibition of acrylamide formation. Five AHA mixtures revealed inhibition in the range of 60 to 50 %. Five mixtures caused 40 % or less reduction. These samples contained TA and/or low levels of AHA.

The pH in the dips ranged from 2.06 to 2.68. This is well below the pKa values for the AHAs. In most dips more than 90% of the AHA was non-dissociated. The exception was the dip with 40 mM TA (sample No. 12) where only 80 % was non-dissociated. This dip caused only 30 % inhibition in acrylamide formation.

The effects of 40 mM MA, MA and CA were comparable. The effect of tartaric acid was lower.

Little, if any, additional inhibitory effect is obtained when two AHAs are combined and the total AHA concentration is doubled (from 40 to 80 mM). The two pairs with MA + TA and TA + CA are less effective in reducing acrylamide than LA alone. The triple combination solutions with a total of 120 mM AHA are slightly more effective than LA alone at 40 mM. No additional effect was obtained by the addition of a 4^{th} AHA, citric acid, even though the total concentration of AHA then reaches 160 mM.

The results illustrate the effect of concentration of AHA on reduction in acrylamide levels. 10 mM is insufficient to reach the effect of using 40 mM for both LA and TA. Even the mixture of the 4 AHAs (each at 10 mM), reaching a total of 40 mM, gave considerably lower inhibition that the effect of 10 mM LA, and even more so of LA at 40 mM. The mixture of the 4 AHAs, each at 40 mM, has the strongest inhibitory effect on acrylamide formation.

### Example 8 - Double dipping

### Materials and methods:

The potato variety Innovator was used. The potatoes were considered to be of excellent quality (large potatoes, no germination, no shrinkage).

### Dip 1 - In processing line in the factory

Par-frying: Raw potatoes - peel - cut - blanch - dip/spray (Dip 1) - dry - par-fry - freeze - store

### Dip 2 - At home/restaurant/catering

Finishing step (final frying): Frozen par-fried potatoes - dip/spray (Dip 2) - (dry) - fry

### Conditions:

Par-frying
   - Cutting: 1x1 cm potato sticks
   - Blanching: 100°C for 5 min
   - Dipping (Dip 1): 40 seconds in water or lactic acid (0.4 %) at 60°C
   - Drying: 10 minutes at 60°C in oven equipped with fan
   - Par-frying: 185°C for 2 minutes
   - Freezing: in sealed plastic bags at -20°C
Finishing step
   - Material: Frozen par-fried sticks from freezer
   - Dipping (Dip 2): 40 seconds in lactic acid (0.4 %) at 60°C. No dipping of control
   - Shaking for 10 seconds for samples dipped in acid
   - Frying: 180°C for 4 minutes 30 seconds
   - Evaluation: Acrylamide analyses

### Results:

**Table 11**

| **Treatment of sample 250 g** | **Dip 1** | **Par-frying** | **Freezing** | **Dip 2** | **Final frying** | **Colour USDA** | **Acrylamide ppb** | **Reduction in acrylamide (%)** |
|---|---|---|---|---|---|---|---|---|
| | **Lactic acid 0.4% or water** | **185°C 2 mins** | | **Lactic acid 0.4% or water** | **180°C 4 mins 30 secs** | | | |
| Double dip | Acid | + | + | Acid | + | 1.30 | 440 | 56 |
| Single dip (Dip 1) | Acid | + | + | None | + | 1.42 | 650 | 35 |
| Single dip (Dip 2) | Water | + | + | Acid | + | 1.71 | 620 | 38 |
| No Dip | Water | + | + | None | + | 1.63 | 1000 | - |

### Conclusions:

The double dip process is highly effective in lowering acrylamide. Substantial reductions were also obtained with the two dips separately, although the double dip was most effective.

### Example 9 - Contact times (dipping in AHA)

### Materials and methods:

The potato variety Innovator was used. The potatoes were considered to be of excellent quality (large potatoes, no germination, no shrinkage).
Dip 1:
   - Blanched potato batons
   - Contact time: 1, 15, 29 and 40 seconds
Dip 2:
   - Frozen, par-fried batons
   - Contact time: 1, 29 and 40 seconds

The experiment was performed as two separate series. In the first series, samples 1-8 were only subjected to Dip 1 and the final frying was performed without additional dipping. In the second series, samples 9-12 were only subjected to Dip 2 and the experiment was performed on par-fried potatoes with no previous dipping. Par-frying and final frying was carried out under the same conditions as in Example 8.

### Results:

**Table 12**

| **Sample No. 250 g** | **Dip 1** | **Dip 1** | **Dip 2** | **Dip 2** | **Colour USDA** | **Acrylamide ppb** | **Reduction in acrylamide (%)** |
|---|---|---|---|---|---|---|---|
| | **Lactic acid 0.4% or water** | **Contact time (secs)** | **Lactic acid 0.4 % or water** | **Contact time (secs)** | | | |
| 1 | Acid | 1 | None | 0 | 1.46 | 830 | 7 |
| 2 | Water | 1 | None | 0 | 2.04 | 890 | - |
| 3 | Acid | 15 | None | 0 | 1.92 | 930 | 7 |
| 4 | Water | 15 | None | 0 | 2.33 | 1000 | - |
| 5 | Acid | 29 | None | 0 | 1.58 | 740 | 15 |
| 6 | Water | 29 | None | 0 | 1.71 | 870 | - |
| 7 | Acid | 40 | None | 0 | 1.42 | 650 | 35 |
| 8 | Water | 40 | None | 0 | 1.63 | 1000 | - |
| | | | | | | | |
| 9 | None | 0 | None | 0 | 2.08 | 1300 | |
| 10 | None | 0 | Acid | 1 | 1.50 | 970 | 25 |
| 11 | None | 0 | Acid | 29 | 2.00 | 820 | 37 |
| 12 | None | 0 | Acid | 40 | 2.12 | 990 | 24 |

### Conclusions:

The effect of contact time in Dip 1 greatly influenced acrylamide reduction. The effect increased from about 7 % when dipped for 1 and 15 seconds, to 15 % and 35 % with contact times of 29 and 40 secs, respectively.

With varying contact time for Dip 2, the effects deviated from those with Dip 1. One second was found to be sufficient for obtaining the effect of lowering acrylamide levels. The effect was similar to the effect of a contact period of 40 seconds.

### Example 10 - Effect of frying temperature

### Materials and methods:

The potato variety Innovator was used. The potatoes were considered to be of excellent quality (large potatoes, no germination, no shrinkage).

New EU regulations require that the frying temperature should not exceed 175°C to avoid the formation of high acrylamide levels. However, this will impact the quality of the fried product.

We propose that higher temperatures can still be used when the potatoes are dipped in lactic acid prior to par-frying and final frying. Samples were tested for acrylamide content. Colour (USDA), crispness and overall taste and texture were also determined.

### Results:

**Table 13**

| **Sample No. 250 g** | **Dip 1** | **Par-Frying** | **Dip 2** | **Frying** | **Crispness** | **Colour USDA** | **Acrylamide ppb** | **Reduction in acrylamide (%)** |
|---|---|---|---|---|---|---|---|---|
| | **Lactic acid 0.4% or water** | | **Lactic acid 0.4%** | | | | | |
| 1 | Acid | 185°C 2 mins | Acid | 180°C 4 mins 30 secs | + | 1.30 | 440 | 56 |
| 2 | Water | 185°C 2 mins | None | 180°C 4 mins 30 secs | + | 1.63 | 1000 | - |
| 3 | Acid | 145°C 4 mins | Acid | 170°C 4 mins 30 secs | + | 0.71 | 200 | 72 |
| 4 | Water | 145°C 4 mins | None | 170°C 4 mins 30 secs | + | 1.71 | 720 | - |

### Conclusions:

When subjecting the French fries to lactic acid treatment prior to par-frying and final frying (double dipping), the acrylamide levels were lowered in both cases, to 440 and 200 ppb, respectively. The effect of double dipping was higher with the EU recommended frying conditions than with standard deep-frying conditions (72 vs. 56 %).

The control samples for the two treatments (high temperature frying vs. low temperature frying) were comparable in colour. When subjecting to double dipping according to the invention, the low-temperature cooked fries were considerably lighter in colour than the high-temperature fries (the higher the number, the darker the colour). This is considered to reflect the acrylamide levels obtained. The fries produced following cooking at lower temperature were less crisp than those fried at the higher temperatures. Tasting of the fries revealed that fries from both treatments were fully cooked.

## Claims

1. A method of reducing acrylamide during cooking of a carbohydrate-containing food, said method comprising at least the following steps:
contacting said food with a first α-hydroxy acid selected from lactic, malic and tartaric acids at a pH less than or equal to its pKₐ, or its lowest pKₐ;
part-cooking said food at a first temperature at which the Maillard reaction occurs whereby to form a part-cooked food;
optionally packaging and/or storing said part-cooked food;
contacting said part-cooked food with a second α-hydroxy acid selected from lactic,
malic and tartaric acids at a pH less than or equal to its pKₐ, or its lowest pKₐ; and
subsequently further cooking said part-cooked food at a second temperature at which the Maillard reaction occurs.

2. A method as claimed in claim 1, wherein the first temperature and/or the second temperature are above about 120°C.

3. A method as claimed in claim 1 or claim 2, wherein the step of part-cooking said food comprises par-frying, preferably wherein said par-frying is carried out at a temperature in the range of from 170 to 190°C, e.g. for a period of from 1 to 5 minutes.

4. A method as claimed in any one of claims 1 to 3, wherein the step of further cooking said part-cooked food comprises finish frying, preferably wherein said finish frying is carried out at a temperature in the range of from 170 to 240°C, e.g. for a period of from 1 to 10 minutes.

5. A method as claimed in any one of the preceding claims, wherein the first and second α-hydroxy acids are identical.

6. A method as claimed in any one of the preceding claims, wherein the first and/or second α-hydroxy acid is lactic acid, preferably wherein the first and second α-hydroxy acids are both lactic acid.

7. A method as claimed in any one of the preceding claims, wherein the first and/or the second α-hydroxy acid is used at a pH which is less than its pKₐ or, where appropriate, less than its lowest pKₐ.

8. A method as claimed in any one of the preceding claims, wherein the first and/or the second α-hydroxy acid is used at a pH which is from 0.1 to 3.0 units, for example from 0.5 to 2.0 units, or from 1.0 to 2.0 units lower than its pKₐ or, where appropriate, its lowest pKₐ.

9. A method as claimed in any one of the preceding claims, wherein the first and/or the second α-hydroxy acid is used at a concentration in the range of from 1 to 500 mM, e.g. from 10 to 400 mM, from 20 to 350 mM, or from 30 to 300 mM.

10. A method as claimed in any one of claims 1 to 8, wherein the first and/or the second α-hydroxy acid is used at a concentration which is selected based on the free amino acid content of the food, e.g. in a molar ratio (a-hydroxy acid : free amino acid) of from 1:1 to 10:1, preferably from 1:1 to 5:1, more preferably from 1:1 to 3:1, e.g. about 2:1.

11. A method as claimed in any one of the preceding claims, wherein contact of said food with the first α-hydroxy acid and/or contact of said part-cooked food with the second α-hydroxy acid is carried out for a period of up to 10 minutes, e.g. up to 5 minutes, preferably from 1 second to 1 minute, more preferably from 20 to 45 seconds, e.g. about 30 seconds.

12. A method as claimed in any one of the preceding claims, wherein contact of said food with the first α-hydroxy acid and/or contact of said part-cooked food with the second α-hydroxy acid is followed by a drying step.

13. A method as claimed in any one of the preceding claims, wherein the step of
contacting said food with the first α-hydroxy acid comprises contacting said food with two or more α-hydroxy acids selected from the group consisting of lactic, malic and tartaric acids at a pH which is less than or equal to the pKₐ, or lowest pKₐ, of the α-hydroxy acid having the lowest pKₐ;
and/or
wherein the step of contacting said part-cooked food with the second α-hydroxy acid comprises contacting said part-cooked food with two or more α-hydroxy acids selected from the group consisting of lactic, malic and tartaric acids at a pH which is less than or equal to the pKₐ, or lowest pKₐ, of the α-hydroxy acid having the lowest pKₐ.

14. A method as claimed in any one of the preceding claims, wherein the part-cooked food is packaged and frozen.

15. A method as claimed in any one of the preceding claims, wherein said food is a vegetable or a tuber, preferably a root vegetable or a tuber, more preferably a potato or sweet potato.

16. A method of reducing acrylamide during final cooking of a part-cooked carbohydrate-containing food, said method comprising at least the following steps:
contacting said part-cooked food with an α-hydroxy acid selected from lactic, malic and tartaric acids at a pH less than or equal to its pKₐ, or its lowest pKₐ; and
subsequently cooking said food (e.g. by finish-frying) at a temperature at which the Maillard reaction occurs, e.g. at a temperature above about 120°C;
wherein said part-cooked food is obtainable (e.g. obtained or prepared) by contacting the food with an α-hydroxy acid selected from lactic, malic and tartaric acids at a pH less than or equal to its pKₐ, or its lowest pKₐ; and part-cooking (e.g. par-frying) said food at a temperature at which the Maillard reaction occurs, e.g. at a temperature above about 120°C.

## Patentansprüche

1. Verfahren zur Verringerung von Acrylamid während des Kochens eines Kohlehydrat enthaltenden Lebensmittels, wobei das Verfahren mindestens die folgenden Schritte umfasst:
Herstellen von Kontakt zwischen dem Lebensmittel und einer ersten α-Hydroxycarbonsäure, ausgewählt aus Milch-, Apfel- und Weinsäure, bei einem pH-Wert von geringer oder gleich ihrem pKₐ oder ihrem niedrigsten pKₐ;
teilweises Kochen des Lebensmittels bei einer ersten Temperatur, bei der die Maillard-Reaktion eintritt, um dadurch ein teilweise gekochtes Lebensmittel zu bilden;
optional Verpacken und/oder Lagern des teilweise gekochten Lebensmittels;
Herstellen von Kontakt zwischen dem teilweise gekochten Lebensmittel und einer zweiten α-Hydroxycarbonsäure, ausgewählt aus Milch-, Apfel- und Weinsäure, bei einem pH-Wert von geringer oder gleich ihrem pKₐ oder ihrem niedrigsten pKₐ; und danach weiteres Kochen des teilweise gekochten Lebensmittels bei einer zweiten Temperatur, bei der die Maillard-Reaktion eintritt.

2. Verfahren nach Anspruch 1, wobei die erste Temperatur und/oder die zweite Temperatur über etwa 120 °C liegt.

3. Verfahren nach Anspruch 1 oder Anspruch 2, wobei der Schritt des teilweisen Kochens des Lebensmittels Vorbacken umfasst, wobei das Vorbacken vorzugsweise bei einer Temperatur im Bereich von 170 bis 190 °C z. B. über einen Zeitraum von 1 bis 5 Minuten ausgeführt wird.

4. Verfahren nach einem der Ansprüche 1 bis 3, wobei der Schritt des weiteren Kochens des teilweise gekochten Lebensmittels Fertigbacken umfasst, wobei das Fertigbacken vorzugsweise bei einer Temperatur im Bereich von 170 bis 240 °C z. B. über einen Zeitraum von 1 bis 10 Minuten ausgeführt wird.

5. Verfahren nach einem der vorstehenden Ansprüche, wobei die erste und die zweite α-Hydroxycarbonsäure identisch sind.

6. Verfahren nach einem der vorstehenden Ansprüche, wobei die erste und/oder die zweite α-Hydroxycarbonsäure Milchsäure ist, wobei die erste und die zweite α-Hydroxycarbonsäure vorzugsweise beide Milchsäure sind.

7. Verfahren nach einem der vorstehenden Ansprüche, wobei die erste und/oder die zweite α-Hydroxycarbonsäure bei einem pH-Wert verwendet werden, der geringer ist als ihr pKₐ oder gegebenenfalls geringer als ihr niedrigster pKₐ ist.

8. Verfahren nach einem der vorstehenden Ansprüche, wobei die erste und/oder die zweite α-Hydroxycarbonsäure bei einem pH-Wert verwendet werden, der von 0,1 bis 3,0 Einheiten beträgt, zum Beispiel von 0,5 bis 2,0 Einheiten oder von 1,0 bis 2,0 Einheiten unter ihrem pKₐ oder gegebenenfalls ihrem niedrigsten pKₐ.

9. Verfahren nach einem der vorstehenden Ansprüche, wobei die erste und/oder die zweite α-Hydroxycarbonsäure bei einer Konzentration verwendet werden, die im Bereich von 1 bis 500 mM, z. B. von 10 bis 400 mM, von 20 bis 350 mM oder von 30 bis 300 mM liegt.

10. Verfahren nach einem der Ansprüche 1 bis 8, wobei die erste und/oder die zweite α-Hydroxycarbonsäure bei einer Konzentration verwendet werden, die auf der Grundlage des Gehalts an freier Aminosäure des Lebensmittels ausgewählt ist, z. B. in einem molaren Verhältnis (α-Hydroxycarbonsäure : freie Aminosäure) von 1:1 bis 10:1, vorzugsweise von 1:1 bis 5:1, bevorzugter von 1:1 bis 3:1, z. B. etwa 2:1.

11. Verfahren nach einem der vorstehenden Ansprüche, wobei der Kontakt des Lebensmittels mit der ersten α-Hydroxycarbonsäure und/oder der Kontakt des teilweise gekochten Lebensmittels mit der zweiten α-Hydroxycarbonsäure über einen Zeitraum von bis 10 Minuten ausgeführt wird, z. B. bis 5 Minuten, vorzugsweise von 1 Sekunde bis 1 Minute, bevorzugter von 20 bis 45 Sekunden, z. B. etwa 30 Sekunden.

12. Verfahren nach einem der vorstehenden Ansprüche, wobei der Kontakt des Lebensmittels mit der ersten α-Hydroxycarbonsäure und/oder der Kontakt des teilweise gekochten Lebensmittels mit der zweiten α-Hydroxycarbonsäure von einem Schritt des Trocknens gefolgt wird.

13. Verfahren nach einem der vorstehenden Ansprüche, wobei der Schritt des
Herstellens von Kontakt zwischen dem Lebensmittel und der ersten α-Hydroxycarbonsäure Herstellen von Kontakt zwischen dem Lebensmittel und zwei oder mehreren α-Hydroxycarbonsäuren umfasst, die ausgewählt sind aus der Gruppe, bestehend aus Milch-, Apfel- und Weinsäure, bei einem pH-Wert, der geringer oder gleich ihrem pKₐ oder niedrigsten pKₐ ist, von der α-Hydroxycarbonsäure, die den niedrigsten pKₐ aufweist;
und/oder
wobei der Schritt des Herstellens von Kontakt zwischen dem teilweise gekochten Lebensmittel und der zweiten α-Hydroxycarbonsäure Herstellen von Kontakt zwischen dem teilweise gekochten Lebensmittel und zwei oder mehreren α-Hydroxycarbonsäuren umfasst, die ausgewählt sind aus der Gruppe, bestehend aus Milch-, Apfel- und Weinsäure, bei einem pH-Wert, der geringer oder gleich dem pKₐ oder niedrigsten pKₐ ist, der α-Hydroxycarbonsäure, die den niedrigsten pKₐ aufweist.

14. Verfahren nach einem der vorstehenden Ansprüche, wobei das teilweise gekochte Lebensmittel abgepackt und eingefroren wird.

15. Verfahren nach einem der vorstehenden Ansprüche, wobei das Lebensmittel ein Gemüse oder eine Knolle, vorzugsweise ein Wurzelgemüse oder -knolle, bevorzugter eine Kartoffel oder Süßkartoffel ist.

16. Verfahren zur Verringerung von Acrylamid während des abschließenden Kochens eines teilweise gekochten, Kohlehydrat enthaltenden Lebensmittels, wobei das Verfahren mindestens die folgenden Schritte umfasst:
Herstellen von Kontakt zwischen dem teilweise gekochten Lebensmittel und einer α-Hydroxycarbonsäure, die ausgewählt ist aus Milch-, Apfel- und Weinsäure, bei einem pH-Wert von geringer oder gleich ihrem pKₐ oder ihrem niedrigsten pKₐ; und
darauffolgendes Kochen des Lebensmittels (z. B. Fertigbacken) bei einer Temperatur, bei der die Maillard-Reaktion eintritt, z. B. bei einer Temperatur von über etwa 120 °C;
wobei das teilweise gekochte Lebensmittel erhaltbar ist (z. B. erhalten oder zubereitet wird) durch Herstellen von Kontakt zwischen dem Lebensmittel und einer α-Hydroxycarbonsäure, die ausgewählt ist aus Milch-, Apfel- und Weinsäure, bei einem pH-Wert von geringer oder gleich ihrem pKₐ oder ihrem niedrigsten pKₐ;
und teilweises Kochen (z. B. Vorbacken) des Lebensmittels bei einer Temperatur, bei der die Maillard-Reaktion eintritt, z. B. bei einer Temperatur von über etwa 120 °C.

## Revendications

1. Procédé de réduction de l'acrylamide pendant la cuisson d'un aliment contenant des glucides, ledit procédé comprenant au moins les étapes suivantes :
la mise en contact dudit aliment avec un premier acide α-hydroxy choisi parmi les acides lactiques, maliques et tartriques à un pH inférieur ou égal à son pKₐ, ou à son pKₐ le plus bas ;
la cuisson partielle dudit aliment à une première température à laquelle la réaction de Maillard se produit pour former un aliment partiellement cuit ;
facultativement, l'emballage et/ou le stockage dudit aliment partiellement cuit ;
la mise en contact dudit aliment partiellement cuit avec un second acide α-hydroxy choisi parmi les acides lactiques, maliques et tartriques à un pH inférieur ou égal à son pKₐ, ou à son pKₐ le plus bas ; et ensuite la poursuite de la cuisson dudit aliment partiellement cuit à une seconde température à laquelle la réaction de Maillard se produit.

2. Procédé selon la revendication 1, dans lequel la première température et/ou la seconde température sont supérieures à environ 120 °C.

3. Procédé selon la revendication 1 ou la revendication 2, dans lequel l'étape de cuisson partielle dudit aliment comprend la friture partielle, de préférence dans lequel ladite friture partielle est effectuée à une température dans la plage de 170 à 190 °C, par exemple pendant une période de 1 à 5 minutes.

4. Procédé selon l'une quelconque des revendications 1 à 3, dans lequel l'étape de poursuite de la cuisson dudit aliment partiellement cuit comprend une friture de finition, de préférence dans lequel ladite friture de finition est effectuée à une température dans la plage de 170 à 240 °C, par exemple pendant une période de 1 à 10 minutes.

5. Procédé selon l'une quelconque des revendications précédentes, dans lequel le premier et le second acides α-hydroxy sont identiques.

6. Procédé selon l'une quelconque des revendications précédentes, dans lequel le premier et/ou le second acide(s) α-hydroxy est(/sont) un acide lactique, de préférence dans lequel le premier et le second acides α-hydroxy sont tous deux un acide lactique.

7. Procédé selon l'une quelconque des revendications précédentes, dans lequel le premier et/ou le second acide(s) α-hydroxy est(/sont) utilisé(s) à un pH inférieur à son pKₐ ou, le cas échéant, inférieur à son pKₐ le plus bas.

8. Procédé selon l'une quelconque des revendications précédentes, dans lequel le premier et/ou le second acide α-hydroxylé est(/sont) utilisé(s) à un pH qui est de 0,1 à 3,0 unités, par exemple de 0,5 à 2,0 unités, ou de 1,0 à 2,0 unités inférieur à son pKₐ ou, le cas échéant, à son pKₐ le plus bas.

9. Procédé selon l'une quelconque des revendications précédentes, dans lequel le premier et/ou le second acide α-hydroxy est(/sont) utilisé(s) à une concentration dans la plage de 1 à 500 mM, par exemple de 10 à 400 mM, de 20 à 350 mM, ou de 30 à 300 mM.

10. Procédé selon l'une quelconque des revendications 1 à 8, dans lequel le premier et/ou le second acide α-hydroxy est(/sont) utilisé(s) à une concentration qui est choisie en fonction de la teneur en acides aminés libres de l'aliment, par exemple dans un rapport molaire (acide α-hydroxy : acide aminé libre) de 1:1 à 10:1, de préférence de 1:1 à 5:1, plus préférentiellement de 1:1 à 3:1, par exemple environ 2:1.

11. Procédé selon l'une quelconque des revendications précédentes, dans lequel le contact dudit aliment avec le premier acide α-hydroxy et/ou le contact dudit aliment partiellement cuit avec le second acide α-hydroxy est(/sont) effectué(s) pendant une période allant jusqu'à 10 minutes, par exemple jusqu'à 5 minutes, de préférence de 1 seconde à 1 minute, plus préférentiellement de 20 à 45 secondes, par exemple environ 30 secondes.

12. Procédé selon l'une quelconque des revendications précédentes, dans lequel la mise en contact dudit aliment avec le premier acide α-hydroxy et/ou la mise en contact dudit aliment partiellement cuit avec le second acide α-hydroxy est(/sont) suivie(s) d'une étape de séchage.

13. Procédé selon l'une quelconque des revendications précédentes, dans lequel l'étape de mise en contact dudit aliment avec le premier acide α-hydroxy comprend la mise en contact dudit aliment avec deux acides α-hydroxy ou plus choisis dans le groupe consistant en les acides lactiques, maliques et tartriques à un pH qui est inférieur ou égal au pKₐ, ou au pKₐ le plus bas, de l'acide α-hydroxy présentant le pKₐ le plus bas ;
et/ou
dans lequel l'étape de mise en contact dudit aliment partiellement cuit avec le second acide α-hydroxy comprend la mise en contact dudit aliment partiellement cuit avec deux acides α-hydroxy ou plus choisis dans le groupe consistant en des acides lactiques, maliques et tartriques à un pH qui est inférieur ou égal au pKₐ, ou au pKₐ le plus bas, de l'acide α-hydroxy présentant le pKₐ le plus bas.

14. Procédé selon l'une quelconque des revendications précédentes, dans lequel l'aliment partiellement cuit est emballé et congelé.

15. Procédé selon l'une quelconque des revendications précédentes, dans lequel ledit aliment est un légume ou un tubercule, de préférence un légume-racine ou un tubercule, plus préférentiellement une pomme de terre ou une patate douce.

16. Procédé de réduction de l'acrylamide pendant la cuisson finale d'un aliment partiellement cuit contenant des glucides, ledit procédé comprenant au moins les étapes suivantes :
la mise en contact dudit aliment partiellement cuit avec un acide α-hydroxy choisi parmi les acides lactiques, maliques et tartriques à un pH inférieur ou égal à son pKₐ, ou à son pKₐ le plus bas ; et
la poursuite de la cuisson dudit aliment (par exemple, par friture de finition) à une température à laquelle la réaction de Maillard se produit, par exemple, à une température supérieure à environ 120 °C ;
dans lequel ledit aliment partiellement cuit peut être obtenu (par exemple, obtenu ou préparé) en mettant en contact l'aliment avec un acide α-hydroxy choisi parmi les acides lactiques, maliques et tartriques à un pH inférieur ou égal à son pKₐ, ou à son pKₐ le plus bas ;
et la cuisson partielle (par exemple, la friture partielle) dudit aliment à une température à laquelle la réaction de Maillard se produit, par exemple, à une température supérieure à environ 120 °C.
